# EUROPEAN PATENT APPLICATION

(11) **EP 4 848 808 A1**
(43) Date of publication of application: **02.12.2026**
(21) Application number: 24919334.3
(22) Date of filing: 25.01.2024
(51) Int. Cl.: H04W 36/00

(54) **MESSAGE TRANSMISSION METHODS, AND DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2024/074114
(87) International publication number: WO 2025/156225

(57) **Abstract**

The embodiments of the present disclosure relate to message transmission methods, and a device and a storage medium. A message transmission method comprises: a first access network device receiving a first message sent by a terminal device, the first message comprising a second message; and determining a third access network device, and sending the second message to the third access network device, wherein the first access network device is an access network device to which a first cell belongs, the first cell is a primary cell (PCell) of the terminal device, the first message is a message sent when the terminal device executes a mobility operation, the mobility operation comprises a secondary cell group (SCG) mobility operation, the SCG mobility operation comprises a primary secondary cell (PSCell) change or a PSCell addition, the PSCell change comprising changing a PSCell of the terminal device from a second cell to a third cell, and the PSCell addition comprising adding the third cell as the PSCell of the terminal device, the first message comprises the second message, the second message is a message corresponding to the third cell, and the third access network device is an access network device to which the third cell belongs.

## Description

### TECHNICAL FIELD

The present disclosure relates to the field of communication technologies, and more particularly to a message transmission method and device, and a storage medium.

### BACKGROUND

With the development of wireless communication technologies, the Dual Connectivity (DC) technology is introduced in the 3rd Generation Partnership Project (3GPP). Based on the DC technology, a terminal may connect to two or more access network devices. By splitting traffic between different access network devices, the coverage and capacity of wireless communication systems may be improved.

### SUMMARY

Embodiments of the present disclosure provide a message transmission method and device, and a storage medium.

According to a first aspect of embodiments of the present disclosure, a message transmission method is provided, performed by a first access network device, in which the first access network device is an access network device to which a first cell belongs, and the first cell is a primary cell (PCell) of a terminal; and the method includes:
receiving a first message sent by the terminal, in which the first message is a message sent by the terminal when performing a mobility operation, the mobility operation includes a secondary cell group (SCG) mobility operation, the SCG mobility operation includes a primary secondary cell (PSCell) change or a PSCell addition, the PSCell change includes changing a PSCell of the terminal from a second cell to a third cell, the PSCell addition includes adding the third cell as the PSCell of the terminal, the first message includes a second message, and the second message is a message corresponding to the third cell;
determining a third access network device, in which the third access network device is an access network device to which the third cell belongs, and the third access network device is different from a second access network device to which the second cell belongs; and
sending the second message to the third access network device.

According to a second aspect of embodiments of the present disclosure, a message transmission method is provided, performed by a terminal, and including:
performing a mobility operation, in which the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, and the second access network device is different from the third access network device; and
sending a first message to a first access network device, in which the first access network device is an access network device to which a first cell belongs, the first cell is a PCell of the terminal, the first message includes a second message, and the second message is a configuration message corresponding to the third cell.

According to a third aspect of embodiments of the present disclosure, a message transmission method is provided, performed by a second access network device, and including:
sending a first indication to a terminal, in which the first indication is configured to instruct the terminal to perform a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to the second access network device, the third cell belongs to a third access network device, and the second access network device is different from the third access network device; and
sending a third message to a first access network device, in which the third message is configured to instruct the first access network device to determine the third access network device.

According to a fourth aspect of embodiments of the present disclosure, a message transmission method is provided, performed by a fourth access network device, and including:
sending a first indication to a terminal, in which the first indication is configured to instruct the terminal to perform a mobility operation, the mobility operation includes a MCG mobility operation and an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, the second access network device is different from the third access network device, the MCG mobility operation includes changing a PCell of the terminal from a fourth cell to a first cell, the first cell belongs to a first access network device, the fourth cell belongs to the fourth access network device, and the fourth access network device is different from the first access network device; and
sending a fourth message to the first access network device, in which the fourth message is configured to instruct the first access network device to determine the third access network device.

According to a fifth aspect of embodiments of the present disclosure, a terminal is provided, including:
a processing module, configured to perform a mobility operation, in which the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, and the second access network device is different from the third access network device; and
a transceiver module, configured to send a first message to a first access network device, in which the first access network device is an access network device to which a first cell belongs, the first cell is a PCell of the terminal, the first message includes a second message, and the second message is a configuration message corresponding to the third cell.

According to a sixth aspect of embodiments of the present disclosure, a first access network device is provided, in which the first access network device is an access network device to which a first cell belongs, and the first cell is a PCell of a terminal; and the first access network device includes:
a transceiver module, configured to receive a first message sent by the terminal, in which the first message is a message sent by the terminal when performing a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the first message includes a second message, and the second message is a message corresponding to the third cell; and
a processing module, configured to determine a third access network device, in which the third access network device is an access network device to which the third cell belongs, and the third access network device is different from a second access network device to which the second cell belongs;
in which the transceiver module is further configured to send the second message to the third access network device.

According to a seventh aspect of embodiments of the present disclosure, a second access network device is provided, including:
a transceiver module, configured to send a first indication to a terminal, in which the first indication is configured to instruct the terminal to perform a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to the second access network device, the third cell belongs to a third access network device, and the second access network device is different from the third access network device; and send a third message to a first access network device, in which the third message is configured to instruct the first access network device to determine the third access network device.

According to an eighth aspect of embodiments of the present disclosure, a fourth access network device is provided, including:
a transceiver module, configured to send a first indication to a terminal, in which the first indication is configured to instruct the terminal to perform a mobility operation, the mobility operation includes a MCG mobility operation and an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, the second access network device is different from the third access network device, the MCG mobility operation includes changing a PCell of the terminal from a fourth cell to a first cell, the first cell belongs to a first access network device, the fourth cell belongs to the fourth access network device, and the fourth access network device is different from the first access network device; and send a fourth message to the first access network device, in which the fourth message is configured to instruct the first access network device to determine the third access network device.

According to a ninth aspect of embodiments of the present disclosure, a communication device is provided, including: one or more processors; in which the communication device may be configured to perform an optional implementation of the first aspect, the second aspect, the third aspect, or the fourth aspect.

According to a tenth aspect of embodiments of the present disclosure, a storage medium is provided, storing instructions that, when run on a communication device, cause the communication device to perform the method according to an optional implementation of the first aspect, the second aspect, the third aspect, or the fourth aspect.

According to an eleventh aspect of embodiments of the present disclosure, a computer program product is provided, including a computer program and/or instructions that, when executed by a communication device, cause the communication device to perform the method according to an optional implementation of the first aspect, the second aspect, the third aspect, or the fourth aspect.

According to an twelfth aspect of embodiments of the present disclosure, a communication system is provided, which may include: a terminal and an access network device, in which the access network device includes at least one of: a first access network device, a second access network device, or a fourth access network device; in which
the terminal is configured to perform the method according to an optional implementation of the second aspect;
the first access network device is configured to perform the method according to an optional implementation of the first aspect;
the second access network device is configured to perform the method according to an optional implementation of the third aspect; and
the fourth access network device is configured to perform the method according to an optional implementation of the fourth aspect.

The technical solutions provided by embodiments of the present disclosure may include the following beneficial effects. The first access network device receives the first message sent by the terminal, in which the first message includes the second message, determines the third access network device, and sends the second message to the third access network device. The first access network device is the access network device to which the first cell belongs, the first cell is the PCell of the terminal, the first message is the message sent by the terminal when performing the mobility operation, the mobility operation includes the SCG mobility operation, the SCG mobility operation includes the PSCell change or the PSCell addition, the PSCell change includes changing the PSCell of the terminal from the second cell to the third cell, the PSCell addition includes adding the third cell as the PSCell of the terminal, the first message includes the second message, the second message is the message corresponding to the third cell; the third access network device is the access network device to which the third cell belongs, and the third access network device is different from the second access network device to which the second cell belongs. In this way, the first access network device may determine the third access network device and forward the second message to the third access network device, which improves the reliability and success rate of mobility operation and enhancing the network performance.

It may be understood that both the foregoing general description and the following detailed description are illustrative and explanatory only and are not restrictive of the present disclosure.

### BRIEF DESCRIPTION OF THE DRAWINGS

To more clearly illustrate the technical solutions in embodiments of the disclosure, accompanying drawings used for the description of the embodiments are introduced below. The following drawings are only some embodiments of the disclosure and do not impose specific limitations on the protection scope of the disclosure.
FIG. 1A is a schematic diagram of an architecture illustrating a communication system according to an embodiment of the present disclosure.
FIG. 1B is a schematic diagram of an architecture illustrating a communication system according to an embodiment of the present disclosure.
FIG. 1C is a schematic diagram illustrating a master cell group (MCG) and a secondary cell group (SCG) according to an embodiment of the present disclosure.
FIG. 2A is a schematic interaction diagram illustrating a message transmission method according to an embodiment of the present disclosure.
FIG. 2B is a schematic interaction diagram illustrating a message transmission method according to an embodiment of the present disclosure.
FIG. 2C is a schematic interaction diagram illustrating a message transmission method according to an embodiment of the present disclosure.
FIG. 2D is a schematic interaction diagram illustrating a message transmission method according to an embodiment of the present disclosure.
FIG. 2E is a schematic interaction diagram illustrating a message transmission method according to an embodiment of the present disclosure.
FIG. 2F is a schematic interaction diagram illustrating a message transmission method according to an embodiment of the present disclosure.
FIG. 3A is a flowchart illustrating a message transmission method according to an embodiment of the present disclosure.
FIG. 3B is a flowchart illustrating a message transmission method according to an embodiment of the present disclosure.
FIG. 3C is a flowchart illustrating a message transmission method according to an embodiment of the present disclosure.
FIG. 4A is a flowchart illustrating a message transmission method according to an embodiment of the present disclosure.
FIG. 4B is a flowchart illustrating a message transmission method according to an embodiment of the present disclosure.
FIG. 4C is a flowchart illustrating a message transmission method according to an embodiment of the present disclosure.
FIG. 5A is a flowchart illustrating a message transmission method according to an embodiment of the present disclosure.
FIG. 5B is a flowchart illustrating a message transmission method according to an embodiment of the present disclosure.
FIG. 6A is a flowchart illustrating a message transmission method according to an embodiment of the present disclosure.
FIG. 6B is a flowchart illustrating a message transmission method according to an embodiment of the present disclosure.
FIG. 7A is a flowchart illustrating a message transmission method according to an embodiment of the present disclosure.
FIG. 7B is a flowchart illustrating a message transmission method according to an embodiment of the present disclosure.
FIG. 8A is a block diagram illustrating a terminal according to an embodiment of the present disclosure.
FIG. 8B is a block diagram illustrating a first access network device according to an embodiment of the present disclosure.
FIG. 8C is a block diagram illustrating a second access network device according to an embodiment of the present disclosure.
FIG. 8D is a block diagram illustrating a third access network device according to an embodiment of the present disclosure.
FIG. 8E is a block diagram illustrating a fourth access network device according to an embodiment of the present disclosure.
FIG. 9A is a block diagram illustrating a communication device according to an embodiment of the present disclosure.
FIG. 9B is a block diagram illustrating a chip according to an embodiment of the present disclosure.

### DETAILED DESCRIPTION

Embodiments of the present disclosure provide a message transmission method and device, and a storage medium.

In a first aspect, embodiments of the present disclosure provide a message transmission method, performed by a first access network device, in which the first access network device is an access network device to which a first cell belongs, and the first cell is a primary cell (PCell) of a terminal; and the method includes:
receiving a first message sent by the terminal, in which the first message is a message sent by the terminal when performing a mobility operation, the mobility operation includes a secondary cell group (SCG) mobility operation, the SCG mobility operation includes a primary secondary cell (PSCell) change or a PSCell addition, the PSCell change includes changing a PSCell of the terminal from a second cell to a third cell, the PSCell addition includes adding the third cell as the PSCell of the terminal, the first message includes a second message, and the second message is a message corresponding to the third cell;
determining a third access network device, in which the third access network device is an access network device to which the third cell belongs, and the third access network device is different from a second access network device to which the second cell belongs; and
sending the second message to the third access network device.

In the foregoing embodiments, the first access network device (master node (MN)) may determine the third access network device (target secondary node (SN)) and forward the second message to the third access network device, which improves the reliability and success rate of mobility operation and enhances the network performance.

In combination with some embodiments of the first aspect, in some embodiments, determining the third access network device includes at least one of:
determining the third access network device according to the first message; or
determining the third access network device according to a third message, in which the third message is a message sent by the second access network device to the first access network device.

In the foregoing embodiments, the first access network device (MN) may determine the third access network device (target SN) according to the first message or the third message, which may flexibly determine the third access network device.

In combination with some embodiments of the first aspect, in some embodiments, the first message further includes at least one of:
target cell information, including frequency information and/or cell identifier corresponding to the third cell; or
a mobility configuration identifier for indicating mobility configuration information corresponding to the SCG mobility operation performed by the terminal.

In the foregoing embodiments, the first access network device (MN) may flexibly determine the third access network device according to any one or more of the foregoing items in first message, which improves the flexibility of device determination.

In combination with some embodiments of the first aspect, in some embodiments, the mobility configuration identifier includes a layer 1 or layer 2 triggered mobility (LTM) configuration identifier, and the LTM configuration identifier indicates LTM configuration information corresponding to the SCG mobility operation performed by the terminal.

In the foregoing embodiments, for the mobility operation based on LTM, the first access network device (MN) may determine the third access network device according to the LTM configuration information, which may adapt to the LTM scenario.

In combination with some embodiments of the first aspect, in some embodiments, the first message includes a first parameter and a second parameter, the first parameter indicates whether the second parameter is configured to determine the third access network device, and the second parameter is a selected PScell for SCG LTM.

In the foregoing embodiments, signaling consumption may be reduced by reusing parameters in the related art.

In combination with some embodiments of the first aspect, in some embodiments, the third message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
transmission configuration indication (TCI) state information for indicating beam information of the third cell.

In the foregoing embodiments, the first access network device (MN) may flexibly determine the third access network device according to any one or more of the foregoing items in the third message, which improves the flexibility of device determination.

In combination with some embodiments of the first aspect, in some embodiments, the mobility configuration identifier includes an LTM configuration identifier, and the LTM configuration identifier indicates LTM configuration information corresponding to the SCG mobility operation performed by the terminal.

In combination with some embodiments of the first aspect, in some embodiments, the SCG mobility operation is triggered by the terminal or the second access network device.

In the foregoing embodiments, for the SCG mobility operation triggered by the terminal or the second access network device (source SN), the first access network device (MN) may determine the third access network device (target SN), and forward the second message, which improves the reliability of mobility operation.

In combination with some embodiments of the first aspect, in some embodiments, the mobility operation further includes a master cell group (MCG) mobility operation, the MCG mobility operation includes changing the PCell of the terminal from a fourth cell to the first cell, the fourth cell belongs to a fourth access network device, and the fourth access network device is different from the first access network device.

In combination with some embodiments of the first aspect, in some embodiments, determining the third access network device includes at least one of:
determining the third access network device according to the first message; or
determining the third access network device according to a fourth message, in which the fourth message is a message sent by the fourth access network device to the first access network device.

In the foregoing embodiments, the first access network device (MN) may determine the third access network device according to the fourth message sent by the fourth access network device (source MN), which improves the flexibility of device determination.

In combination with some embodiments of the first aspect, in some embodiments, the fourth message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In the foregoing embodiments, the first access network device (MN) may flexibly determine the third access network device according to any one or more of the foregoing items in the fourth message, which improves the flexibility of device determination.

In combination with some embodiments of the first aspect, in some embodiments, the mobility configuration identifier includes an LTM configuration identifier, and the LTM configuration identifier indicates LTM configuration information corresponding to the SCG mobility operation performed by the terminal.

In combination with some embodiments of the first aspect, in some embodiments, the mobility operation is triggered by the terminal or the fourth access network device.

In the foregoing embodiments, for the MCG mobility operation and the SCG mobility operation triggered by the terminal or the fourth access network device (source SN), the first access network device (MN) may determine the third access network device (target SN), and forward the second message, which improves the reliability of mobility operation.

In combination with some embodiments of the first aspect, in some embodiments, the mobility operation is a cell change or addition triggered based on LTM.

In combination with some embodiments of the first aspect, in some embodiments, the first message is a first radio resource control (RRC) reconfiguration complete message, the second message is a second RRC reconfiguration complete message, and the first RRC reconfiguration complete message includes the second RRC reconfiguration complete message.

In a second aspect, embodiments of the present disclosure provide a message transmission method, performed by a terminal, and including:
performing a mobility operation, in which the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, and the second access network device is different from the third access network device; and
sending a first message to a first access network device, in which the first access network device is an access network device to which a first cell belongs, the first cell is a PCell of the terminal, the first message includes a second message, and the second message is a configuration message corresponding to the third cell.

In the foregoing embodiments, the terminal may notify the first access network device (MN) of relevant information of the third access network device (target SN) via the first message, so that the first access network device may forward the second message to the third access network device, which improves the reliability and success rate of mobility operation and enhances the network performance.

In combination with some embodiments of the second aspect, in some embodiments, the first message is configured to instruct the first access network device to determine the third access network device.

In combination with some embodiments of the second aspect, in some embodiments, the first message includes at least one of:
an LTM configuration identifier, configured to instruct the terminal to perform an LTM configuration corresponding to the SCG mobility operation;
target cell information, including frequency information and/or cell identifier corresponding to the third cell; or
a mobility configuration identifier for indicating mobility configuration information corresponding to the SCG mobility operation performed by the terminal.

In combination with some embodiments of the second aspect, in some embodiments, the mobility configuration identifier includes the LTM configuration identifier, and the LTM configuration identifier indicates LTM configuration information corresponding to the SCG mobility operation performed by the terminal.

In combination with some embodiments of the second aspect, in some embodiments, the SCG mobility operation is triggered by the terminal or the second access network device.

In combination with some embodiments of the second aspect, in some embodiments, the method further includes:
receiving a first indication sent by the second access network device, in which the first indication is configured to instruct the terminal to perform the mobility operation.

In combination with some embodiments of the second aspect, in some embodiments, the mobility operation further includes an MCG mobility operation, the MCG mobility operation includes changing the PCell of the terminal from a fourth cell to the first cell, the fourth cell belongs to a fourth access network device, and the fourth access network device is different from the first access network device.

In combination with some embodiments of the second aspect, in some embodiments, the mobility operation is triggered by the terminal or the fourth access network device.

In combination with some embodiments of the second aspect, in some embodiments, the mobility operation is a cell change or addition triggered based on LTM.

In combination with some embodiments of the second aspect, in some embodiments, the first message is a first RRC reconfiguration complete message, the second message is a second RRC reconfiguration complete message, and the first RRC reconfiguration complete message includes the second RRC reconfiguration complete message.

In a third aspect, embodiments of the present disclosure provide a message transmission method, performed by a second access network device, and including:
sending a first indication to a terminal, in which the first indication is configured to instruct the terminal to perform a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to the second access network device, the third cell belongs to a third access network device, and the second access network device is different from the third access network device; and sending a third message to a first access network device, in which the third message is configured to instruct the first access network device to determine the third access network device.

In the foregoing embodiments, the second access network device (source SN) may notify the first access network device (MN) of relevant information of the third access network device (target SN) via the third message, so that the first access network device may forward the second message to the third access network device, which improves the reliability and success rate of mobility operation and enhances the network performance.

In combination with some embodiments of the third aspect, in some embodiments, the third message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In combination with some embodiments of the third aspect, in some embodiments, the mobility configuration identifier includes an LTM configuration identifier, and the LTM configuration identifier indicates LTM configuration information corresponding to the SCG mobility operation performed by the terminal.

In combination with some embodiments of the third aspect, in some embodiments, the SCG mobility operation is triggered by the terminal or the second access network device.

In combination with some embodiments of the third aspect, in some embodiments, the mobility operation is a cell change or addition triggered based on LTM.

In a fourth aspect, embodiments of the present disclosure provide a message transmission method, including: sending a first indication to a terminal, in which the first indication is configured to instruct the terminal to perform a mobility operation, the mobility operation includes a MCG mobility operation and an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, the second access network device is different from the third access network device, the MCG mobility operation includes changing a PCell of the terminal from a fourth cell to a first cell, the first cell belongs to a first access network device, the fourth cell belongs to the fourth access network device, and the fourth access network device is different from the first access network device; and sending a fourth message to the first access network device, in which the fourth message is configured to instruct the first access network device to determine the third access network device.

In the foregoing embodiments, the fourth access network device (source MN) may notify the first access network device (target MN) of relevant information of the third access network device (target SN) via the fourth message, so that the first access network device may forward the second message to the third access network device, which improves the reliability and success rate of mobility operation and enhances the network performance.

In combination with some embodiments of the fourth aspect, in some embodiments, the fourth message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In combination with some embodiments of the fourth aspect, in some embodiments, the mobility configuration identifier includes an LTM configuration identifier, and the LTM configuration identifier indicates LTM configuration information corresponding to the SCG mobility operation performed by the terminal.

In combination with some embodiments of the fourth aspect, in some embodiments, the mobility operation is triggered by the terminal or the fourth access network device.

In combination with some embodiments of the fourth aspect, in some embodiments, the mobility operation is a cell change or addition triggered based on LTM.

In a fifth aspect, embodiments of the present disclosure provide a terminal, which may include at least one of a transceiver module or a processing module; in which the terminal may be configured to execute an optional implementation of the second aspect.

In a sixth aspect, embodiments of the present disclosure provide a first access network device, which may include at least one of a transceiver module or a processing module; in which the first access network device may be configured to execute an optional implementation of the first aspect.

In a seventh aspect, embodiments of the present disclosure provide a second access network device, which may include at least one of a transceiver module or a processing module; in which the second access network device may be configured to perform an optional implementation of the third aspect.

In an eighth aspect, embodiments of the present disclosure provide a fourth access network device, which may include at least one of a transceiver module or a processing module; in which the fourth access network device may be configured to perform an optional implementation of the fourth aspect.

In a ninth aspect, embodiments of the present disclosure provide a communication device, which may include one or more processors; in which the communication device may be configured to perform an optional implementation of the first aspect, the second aspect, the third aspect, or the fourth aspect.

In a tenth aspect, embodiments of the present disclosure provide a storage medium, which stores instructions that, when run on a communication device, cause the communication device to perform the method according to an optional implementation of the first aspect, the second aspect, the third aspect, or the fourth aspect.

In an eleventh aspect, embodiments of the present disclosure provide a computer program product, which includes a computer program and/or instructions that, when executed by a communication device, cause the communication device to perform the method according to an optional implementation of the first aspect, the second aspect, the third aspect, or the fourth aspect.

In a twelfth aspect, embodiments of the present disclosure provide a computer program that, when run on a computer, causes the computer to perform the method according to an optional implementation of the first aspect, the second aspect, the third aspect, or the fourth aspect.

In a thirteenth aspect, embodiments of the present disclosure provide a chip or chip system. The chip or chip system includes a processing circuit, which is configured to perform the method according to an optional implementation of the first aspect, the second aspect, the third aspect, or the fourth aspect.

In a fourteenth aspect, embodiments of the present disclosure provide a communication system, which may include: a terminal and a first access network device; in which the terminal is configured to perform the method according to an optional implementation of the first aspect, and the first access network device is configured to perform the method according to an optional implementation of the second aspect.

It may be understood that all of the terminal, the access network device, the first access network device, the second access network device, the fourth access network device, the communication device, the communication system, the storage medium, the computer program product, the computer program, the chip, or the chip system may be configured to perform the method in embodiments of the disclosure. Therefore, for beneficial effects they may achieve, reference may be made to the beneficial effects in corresponding methods, which are not repeated here.

Embodiments of the disclosure provide a message transmission method and device, and a storage medium. In some embodiments, the terms such as "message transmission method", "information processing method", "communication method" may be used interchangeably. The terms such as "message transmission apparatus", "information processing apparatus", "communication apparatus", and "communication device" may be used interchangeably. The terms such as "information processing system" and "communication system" may be used interchangeably.

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and an order of the steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with alternative implementations of other embodiments.

In embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" or "multiple" may mean two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is performed independently of B); in some embodiments, B (B is performed independently of A); in some embodiments, one is selected from A and B to be executed (A and B are selectively executed); in some embodiments, A and B (both A and B are performed). When there are more branches such as A, B, C, etc., the foregoing process is applicable.

In some embodiments, the descriptions such as "A or B", etc. may include the following technical solutions according to situations: in some embodiments, A (A is performed independently of B); in some embodiments, B (B is performed independently of A); in some embodiments, one is selected from A and B to be performed (A and B are selectively performed). When there are more branches such as A, B, C, etc., the foregoing process is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". As another example, if the descriptive object is "level", the ordinal number before the "level" in the "first level" and the "second level" does not limit the priority between the "levels". As another example, a number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. As another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device (such as, a first access network device, an access network device, a core network device, etc.,) included in a network.

In some embodiments, the network device may include at least one of the access network device or the core network device.

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "terminal-side device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the "access network device", the "core network device", or the "first access network device" may be replaced with the "terminal". For example, the structure where communication between access network devices, core network devices, or first access network devices and terminals is replaced with communication between multiple terminals (e.g., device-to-device (D2D), vehicle-to-everything (V2X), etc.) may also be applied to embodiments of the disclosure. In this case, the terminal may also be configured to have all or some of the functions of the access network device. In addition, the terms such as "uplink" and "downlink" may be replaced with the terms (e.g., "sidelink") corresponding to the communication between terminals. For example, "uplink channels" or "downlink channels" may be replaced with "side channels" or "direct channels", and "uplink links" or "downlink links" may be replaced with "side links" or "direct links".

In some embodiments, the "terminal" may be replaced with the "access network device", the "core network device", or the "first access network device". In this case, the access network device, the core network device, or the first access network device may also be configured with all or some of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

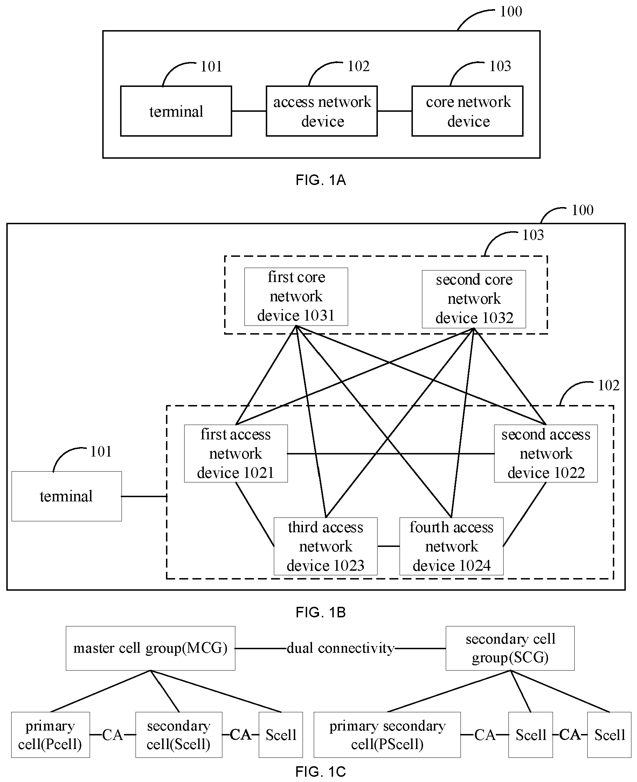

FIG. 1A is a schematic diagram of an architecture illustrating a communication system according to an embodiment of the disclosure. As illustrated in FIG. 1A, the communication system 100 may include a terminal 101, an access network device 102, and a core network device 103.

In some embodiments, the terminal 101 may include, but is not limited to, at least one of a mobile phone, a wearable device, an Internet of Things device, a vehicle with a communication function, a smart vehicle, in-vehicle terminal, a Pad, a computer with a wireless transceiver function, a road side unit (RSU), a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home.

In some embodiments, the access network device 102 may be a node or device that connects the terminal to a wireless network. The access network device may include, but is not limited to, at least one of an evolved NodeB (eNB) in a fifth generation (5G) communication system, a next generation eNB (ng-eNB), a next generation NodeB (gNB), a nodeB (NB), a home nodeB (HNB), a home evolved nodeB (HeNB), a wireless backhaul device, a radio network controller (RNC), a base station controller (BSC), a base transceiver station (BTS), a baseband unit (BBU), a mobile switching center, a base station in a sixth generation (6G) communication system, an Open RAN, a Cloud RAN, a base station in another communication system, or an access node in a wireless fidelity (Wi-Fi) system.

In some embodiments, the technical solution of the disclosure may be applied to an Open RAN architecture. In this case, an interface between or within access network devices involved in embodiments of the disclosure may be transformed into an internal interface of Open RAN. The procedures and information interactions between these internal interfaces may be implemented via software or program.

In some embodiments, the access network device may include a central unit (CU) and a distributed unit (DU). The CU may also be referred to as a control unit. By adopting a CU-DU structure, a protocol layer of the access network device may be separated. Some of protocol layer functions are centrally controlled by the CU, while the remaining part or all of protocol layer functions are distributed in the DU, which is centrally controlled by the CU, but is not limited to this.

In some embodiments, the core network device 103 may be a device, or may be multiple devices or device groups. The core network may include at least one of an evolved packet core (EPC), a 5G core network (5GCN), a 6G core network (6GCN), or a next generation core (NGC).

It may be understood that the communication system in the embodiments of the disclosure is for more clearly illustrating the technical solutions in embodiments of the disclosure and does not constitute a limitation on the technical solutions in embodiments of the disclosure. Those skilled in the art may understand that with the evolution of system architectures and the emergence of new service scenarios, the technical solutions in embodiments of the disclosure are also applicable to similar technical problems.

The following embodiments of the disclosure may be applied to the communication system 100 or some of the subjects illustrated in FIG. 1A, which is not limited herein. The subjects illustrated in FIG. 1A are examples, and the communication system may include all or some of the subjects in FIG. 1A, or may include other subjects than those illustrated in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), evolved universal terrestrial radio access (E-UTRA), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

In some embodiments, the communication system may support the dual connectivity technology, which enables different access network devices to split traffic via X2 or Xn interfaces, which improves the coverage and capacity of the communication system.

FIG. 1B is a schematic diagram of an architecture illustrating a communication system according to an embodiment of the present disclosure. The communication system 100 may have a plurality of terminals 101, or a plurality of access network devices 102, or a plurality of core network devices 103. As illustrated in FIG. 1B, the access network devices 102 may include a first access network device 1021, a second access network device 1022, a third access network device 1023, a fourth access network device 1024, etc. Optionally, the core network devices 103 may include a first core network device 1031, a second core network device 1032, etc. It should be noted that a quantity of access network devices and core network devices described above is only for illustrative purposes and is not limited to that illustrated in FIG. 1B. For example, the access network devices 102 may only include the first access network device 1021 and the second access network device 1022; and for another example, the access network devices 102 may also include other access network devices, such as a fifth access network device, a sixth access network device, etc.

In some embodiments, different access network devices may or may not be connected to each other, and interfaces connecting the access network devices may include, but are not limited to, at least one of: an X2 interface or an Xn interface.

In some embodiments, one access network device may be connected to one or more core network devices. For example, the first access network device may be connected to the first core network device and the second core network device, or may also be connected only to the first core network device. Optionally, some access network devices may not be connected to core network devices, or may not be directly connected to core network devices, which is not limited herein.

In some embodiments, based on the dual connectivity technology, the terminal may connect to the first access network device as an MN and a second access network device as an SN. The first access network device (i.e., MN) may be connected to the core network device, and the first access network device and the second access network device may be connected to each other. Optionally, the second access network device (i.e., SN) may also be connected to the core network device.

In an implementation, an interface between the first access network device (i.e., MN) and the core network device (e.g., 5GC) may be an NG interface, which may include an NG control plane (NG-C) interface and an NG user plane (NG-U) interface. The first access network device and the second access network device may be connected via the Xn interface. An interface between the second access network device (i.e., SN) and the core network device may be the NG-U interface. This method enables an NR-NR dual connectivity, also known as the NR-DC technology. The terminal may connect to both the first access network device as the MN and the second access network device as the SN. The first access network device may connect to the core network device via the NG interface, and optionally the second access network device may also connect to the 5GC via the NG-U interface. Optionally, the terminal may also be connected to a single access network device, which may simultaneously serve as both the MN and the SN, meaning that the first access network device and the second access network device described above may be the same access network device.

In an implementation, the interface between the first access network device (i.e., MN) and the core network device (e.g., EPC) may be an S1 interface, which may include an S1 control plane (S1-C) interface and an S1 user plane (S1-U) interface. The first access network device and the second access network device may be connected via the X2 interface. Optionally, the interface between the second access network device (i.e., SN) and the core network device may be the S1-U interface. This method enables the MR-DC technology, which is a generalized Intra-E-UTRA dual connectivity, where the terminal may utilize radio resources provided by two different schedules located on two different NG-RAN nodes (which are interconnected via a non-ideal backhaul, one providing an NR access via a non-ideal backhaul connection, and the other providing an E-UTRA or NR access). One of the NG-RAN nodes is the MN, and the other of the NG-RAN nodes is the SN. The MN and the SN are connected via a network interface, with at least the MN connected to the core network device. Optionally, the SN may also be connected to the core network device.

In some embodiments, the access network device described above may also be referred to as a node, a next generation nodeB (gNB), a nodeB (NB), etc.

In some embodiments, the first access network device 1021 described above may be a first node, for example, it may be an MN, or an MN or target MN (T-MN) in a mobility operation (such as cell change, addition or deletion).

In some embodiments, the second access network device 1022 described above may be a second node, for example, it may be an SN, or a source SN (S-SN) in the mobility operation (such as cell change, addition or deletion).

In some embodiments, the third access network device 1023 described above may be a third node, for example, it may be an SN, or a target SN (T-SN) in the mobility operation (such as cell change, addition or deletion).

In some embodiments, the fourth access network device 1024 described above may be a fourth node, for example, it may be an MN, or a source MN (S-MN) in the mobility operation (such as cell change, addition or deletion).

In some embodiments, based on the dual connectivity technology, the terminal may access a plurality of cells. For example, the terminal may access two cells, namely a PCell and an SCell.

In some embodiments, based on the dual connectivity technology, the terminal may access a plurality of cell groups. For example, the terminal may access two cell groups, namely an MCG and an SCG.

In some embodiments, the MCG may correspond to the first access network device. For example, cells in the MCG are all cells within the first access network device, and the first access network device may serve as the MN. The SCG may correspond to the second access network device. For example, cells in the SCG are all cells within the second access network device, and the second access network device may serve as the SN.

FIG. 1C is a schematic diagram illustrating an MCG and an SCG according to an embodiment of the present disclosure. As illustrated in FIG. 1C, the terminal may access two cell groups, i.e., the MCG and the SCG, based on the dual connectivity technology.

In some embodiments, the MCG may include one PCell and one or more SCells. Optionally, the PCell may be the cell where the terminal initially accesses, and the PCell is the most important cell in the MCG. Optionally, the MCG may also not include the SCell; for example, the MCG may have only one PCell without SCells. Optionally, all cells in the MCG other than the PCell are SCells, and the PCell in the MCG and SCells in the MCG are combined via a carrier aggregation (CA), which may improve the transmission rate and meet the rate requirements by the user.

In some embodiments, the SCG may include a PSCell, or the SCG may include a PSCell and one or more SCells. Optionally, the SCG may also not include the SCells; for example, the SCG may have only one PSCell. Optionally, all cells in the SCG other than the PSCell are SCells, and the PSCell in the MCG and the SCells in the MCG may be combined via the CA.

In some embodiments, the concept of a special primary cell (sPCell) is provided, which may include the PCell and/or PSCell. Optionally, a main signaling of the terminal may be transmitted via the sPCell.

In some embodiments of the present disclosure, the communication system may support a mobility operation in a dual connectivity scenario. Optionally, the mobility operation may be triggered based on a layer 1 (L1) or layer 2 (L2) triggered mobility (L1/L2-triggered mobility, LTM) or other mobility manners. The LTM may reduce the mobility latency.

In some embodiments, the LTM may be a procedure of PCell/PSCell cell switch triggered by a network device via a medium access control control element (MAC CE) based on an L1 measurement result, which may be accompanied by MCG/SCG change.

In the LTM, the network device (such as gNB) receives an L1 measurement report from the terminal (UE). Based on this report, the gNB changes a serving cell of the UE by a cell switch command via the MAC CE. The cell switch command may instruct the gNB to provide an LTM candidate cell configuration to the UE in advance via an RRC signaling. The UE accesses a target cell indicated in the cell switch command based on the cell switch command received. The LTM may be configured to reduce the mobility latency.

The LTM candidate cell configuration may only be added, modified, and released by the network device via the RRC signaling. The LTM procedure may be configured to reduce the mobile latency.

The LTM may support a subsequent LTM, where the subsequent LTM may refer to that a subsequent LTM cell handover procedure between candidate cells without RRC reconfiguration by the network device. In other words, after performing the mobility operation, the UE may not delete the LTM configuration information autonomously. The LTM configuration information may continue to be used for triggering the subsequent LTM even without the RRC reconfiguration and update.

The LTM may support both intra-gNB DU mobility and intra-gNB-CU inter-gNB-DU mobility. The LTM may support both intra-frequency and inter-frequency mobility, including a mobility to an inter-frequency cell that is not a current serving cell. For example, the LTM may support at least one of the following scenarios:
a PCell change in a non-CA scenario and a non-DC scenario;
a PCell change in a CA scenario; or
a dual-connection scenario, MCG PCell change and SCG PSCell change without an MN involvement case (i.e., an intra-SN PSCell change), where the LTM for simultaneous PCell and PSCell change is not supported.

In some embodiments, the communication system may support the LTM of intra DU and inter-DU intra-CU.

In other embodiments, the communication system may be extended to support the LTM of inter-CU (inter-node/gNB). In the LTM of inter-CU (inter-node/gNB) for SCG PSCell change, the MN may be involved. The MN is responsible for coordinating a configuration between candidate PSCells of different CUs.

In some embodiments, the LTM may be configured with the LTM configuration information via an LTM-Config.

The LTM configuration information may include, but is not limited to, one or more of:
an LTM reference configuration;
one or more candidate cell configurations (being added, modified, or deleted via ltm-CandidateToReleaseList and ltm-CandidateToAddModList); and
an LTM CSI resource configuration;
or the like.

The candidate cell configuration may be configured via an LTM-Candidate, and includes, but is not limited to, one or more of:
a candidate configuration identifier;
a candidate cell identifier; and
a candidate configurations (represented by RRCReconfiguration);
or the like.

In some embodiments, the candidate cell configuration may be a configuration part of an RRCReconfiguration message associated with a candidate cell, e.g., for the LTM or subsequent CPAC (Conditional PSCell Addition or Change). The candidate configuration may be a complete candidate configuration or a delta configuration relatively to the LTM reference configuration.

In some embodiments, the LTM reference configuration information may be a configuration provided by the access network device to the UE that may be common to cells within the same cell group (e.g., within one MCG or one SCG), and the same cell group may be a candidate cell group.

In some embodiments, the mobility operation in the dual connectivity scenario may include an MCG mobility operation and/or an SCG mobility operation.

The MCG mobility operation may include at least one of: a PCell change, an SCell change, an SCell addition, an SCell deletion, or an MCG change. The PCell change may also be referred to as a switch.

The SCG mobility operation may include at least one of: a PSCell change, a PSCell addition, a PSCell deletion, an SCell change, an SCell addition, an SCell deletion, an SCG change, an SCG addition, or an SCG deletion.

In some embodiments, the MCG mobility operation and the SCG mobility operation may be executed independently or in parallel. For example, the PSCell change may be triggered individually, or the PSCell addition may be triggered individually, or both the PCell change and the PSCell change may be triggered simultaneously, or both the PCell change and the PSCell addition may be triggered simultaneously, or all the PCell change, the SCell change in the MCG, the PSCell change and the SCell change in the SCG may be triggered simultaneously, or other individual or combined scenarios exist.

Optionally, the terms such as "mobility operation", "mobility", "cell switch", "cell group change", "serving cell switch", and "handover", etc., may be used interchangeably.

In some embodiments, the mobility operation described above in the dual connectivity scenario may be triggered via the LTM or other mobility manners, which is not limited herein.

In some embodiments of the present disclosure, the communication system may support the mobility operation. For example, the access network device may configure one or more mobility configuration identifiers corresponding to the mobility operation for the terminal. The mobility configuration identifier(s) instruct(s) the terminal to perform mobility configuration information corresponding to the mobility operation.

One mobility configuration identifier may correspond to one candidate cell. For example, one mobility configuration identifier may correspond to a cell identifier of one candidate cell, and the cell identifier may be a Physical Cell Identifier (PCI) and/or a Cell Global Identifier (CGI). The candidate cell may be the cell measured by the terminal. Based on a measurement result of the candidate cell, the terminal may determine a target cell from one or more candidate cells and trigger a mobility operation (such as a cell change or cell addition) corresponding to the target cell.

One mobility configuration identifier may also correspond to mobility configuration information of one candidate cell.

In some embodiments, the access network device may configure the configuration information for the mobility operation for the terminal, and the configuration information may include at least one of:
mobility reference configuration information;
mobility configuration information corresponding to one or more candidate cells; or
a channel state information (CSI) resource configuration, such as LTM CSI resource configuration information.

Optionally, the configuration information may be configured via the LTM-Config.

In some embodiments, the mobility reference configuration information may be a configuration provided by the access network device to the UE that may be common to cells within the same cell group (e.g., within one MCG or one SCG), and the cell group may be the candidate cell group.

In some embodiments, the mobility configuration information corresponding to one candidate cell may include:
a mobility configuration identifier;
a cell identifier of the candidate cell; and
candidate configuration information, being represented via the RRC reconfiguration.

In an implementation, the candidate configuration information may be a configuration in the RRC reconfiguration message associated with the candidate cell.

For example, the candidate configuration may be delta configuration information relatively to the mobility reference configuration information. In this way, each cell may only need to configure its own corresponding delta configuration, which may reduce an amount of information that each cell needs to configure, and reduce the consumption of radio resources by air interface signalings.

For another example, the candidate configuration information may be complete configuration information that includes the mobility reference configuration information and the delta configuration information.

In some embodiments, the mobility configuration information corresponding to the candidate cell may be provided by the access network device for the terminal via the RRC signaling. The configuration may include at least one of adding, modifying, or releasing.

Based on the configuration information, the terminal may determine the cell identifier of the candidate cell corresponding to the mobility configuration identifier, and may also determine a corresponding mobility configuration identifier via the cell identifier of the candidate cell.

In some embodiments, the candidate cell may be a candidate PCell, a candidate PSCell, or a candidate SCell.

In some embodiments, the candidate cell group may be a candidate MCG or a candidate SCG.

In some embodiments, the mobility operation described above may be a mobility operation based on the LTM, the configuration information for the mobility operation described above may be configuration information for the LTM, the mobility configuration identifier described above may be an LTM configuration identifier, and the mobility configuration information corresponding to the candidate cell may be LTM configuration information corresponding to the candidate cell. The LTM configuration information may be configured via an LTM-Candidate information element. For example, the candidate cell configuration may be added, modified, or deleted via the ltm-CandidateToReleaseList and the ltm-CandidateToAddModList.

In some embodiments, the terminal may measure the candidate cell according to the mobility configuration information described above to obtain the measurement result of the candidate cell. For example, in the mobility operation based on the LTM, the terminal performs an L1 measurement on the candidate cell and may obtain at least one of the following measurement results: a Layer 1 Reference Signal Receiving Power (L1-RSRP), a Layer 1 Signal to Interference plus Noise Ratio (L1-SINR), or a Layer 1 Reference Signal Receiving Quality (L1-RSRQ).

In some embodiments, the terminal may send the measurement result to the access network device, and the access network device may send a first indication to the terminal according to the measurement result. The first indication may be configured to instruct the terminal to perform the mobility operation.

Optionally, the name of the first indication is not limited, and may be, for example, "mobility operation indication", "mobility operation command", "cell switch command", "cell change command", "cell addition command", "cell deletion command", "cell switch indication", "cell change indication", "cell addition indication", "cell deletion indication", etc.

In an implementation, the first indication may indicate that one access network device provides the mobility configuration identifier to the terminal in advance via the RRC signaling. The terminal determines the mobility configuration identifier according to the first indication received and accesses the candidate cell corresponding to the mobility configuration identifier.

In another implementation, the first indication may indicate the cell identifier of one candidate cell, and the terminal may access the candidate cell corresponding to the cell identifier.

In some embodiments, the access network device may send the first indication via an L1 signaling or L2 signaling, in which the L1 signaling may include downlink control information (DCI) or other L1 signaling, and the L2 signaling may include an MAC CE or other L2 signaling.

In some embodiments, the communication system may also support a subsequent LTM, which refers to a subsequent LTM cell handover procedure between candidate cells without the RRC reconfiguration by the access network device. In other words, after performing the mobility operation (such as cell handover), the terminal may not delete the LTM configuration autonomously. The LTM configuration may continue to be used for triggering the subsequent LTM even without the RRC reconfiguration and update.

In some embodiments, the mobility operation based on the LTM may include at least one of:
an intra DU mobility operation, performing the cell change, cell addition, or cell deletion within the same DU, meaning that the target cell and the source cell belong to the same DU;
an inter-DU mobility operation, performing the cell change, cell addition, or cell deletion between different DUs, meaning that the target cell and the source cell belong to different DUs;
an intra CU mobility operation, performing the cell change, cell addition, or cell deletion within the same CU, meaning that the target cell and the source cell belong to the same CU; or
an inter-CU mobility operation, performing the cell change, cell addition, or cell deletion between different CUs, meaning that the target cell and the source cell belong to different CUs.

In some embodiments, the inter-CU may also be referred to as an inter-node, an inter-gNB, or an inter-access network device, meaning that the target cell and the source cell belong to different access network devices (nodes, gNBs).

In some embodiments, the intra CU mobility operation scenarios may include the intra CU inter-DU mobility operation and/or the intra-DU mobility operation.

In some embodiments, in an SCG PSCell cell change triggered based on the inter-CU LTM, the access network device serving as the MN may be involved, and the MN may be configured to coordinate a configuration between candidate PSCells of different CUs.

In some embodiments, according to a correspondence between different cells and the access network devices, the mobility operation in the dual connectivity scenario may include at least one of:
an intra-MN MCG mobility operation, such as changing/switching the PCell in the MCG from a fourth cell to a first cell, where the fourth cell and the first cell belong to the same access network device (MN);
an inter-MN MCG mobility operation, such as changing the PCell in the MCG from a fourth cell to a first cell, where the fourth cell belongs to a fourth access network device, the fourth access network device is the target MN, the first cell belongs to a first access network device, and the first access network device is the source MN;
an intra-SN SCG mobility operation, such as changing the PSCell in the SCG from a second cell to a third cell, where the second cell and the third cell belong to the same access network device (SN);
an inter-SN SCG mobility operation, such as changing the PSCell in the SCG from a second cell to a third cell, where the second cell and the third cell belong to different access network devices (SNs), for example, the second cell belongs to a second access network device, the second access network device is the source SN, the third cell belongs to a third access network device, and the third access network device is the target SN; or
an inter-node MCG mobility operation and an inter-node SCG mobility operation, for example, changing the PCell in the MCG from a fourth cell to a first cell, and changing the PSCell in the SCG from a second cell to a third cell, where the fourth cell belongs to a fourth access network device, the fourth access network device is the target MN, the first cell belongs to a first access network device, the first access network device is the source MN, the second cell belongs to a second access network device, the second access network device is the source SN, the third cell belongs to a third access network device, and the third access network device is the target SN.

In some embodiments, the mobility operation in the dual connectivity scenario (e.g., the mobility operation based on the LTM) may be triggered by at least one of the MN, SN, or terminal.

In some embodiments, for the intra-SN SCG mobility operation, mobility configuration information (e.g., the LTM configuration information) corresponding to the SCG mobility operation may be sent by the SN directly to the terminal, or may be transmitted by the SN via the MN transparently to the terminal device.

Optionally, the intra-SN SCG mobility operation based on the LTM may not involve the MN. After the terminal performs cell switch, it may send an RRC reconfiguration complete message to the SN. For example, the RRC reconfiguration complete message may be sent through a signaling radio bearer 3 (SRB3) directly to the SN or via the MN transparently to the SN.

In other embodiments, for the inter-SN SCG mobility operation, or the inter-Node MCG mobility operation and the inter-Node SCG mobility operation, in order to realize the inter-Node PSCell change or addition, the involvement of MN is required, and the MN needs to exchange information with the source SN and a candidate SN. In this scenario, the LTM configuration may be configured to the terminal via the MN. After the terminal performs cell switch, it may send an MN RRC reconfiguration complete message, which carries an SN RRC reconfiguration complete message, to the MN. Then, the MN may forward the SN RRC reconfiguration complete message to the target SN.

Optionally, the MN RRC reconfiguration complete message may be referred to as a first message or a first RRC reconfiguration complete message, and the SN RRC reconfiguration complete message may be referred to as a second message or a second RRC reconfiguration complete message.

In some embodiments, in a case that the inter-SN SCG mobility operation, or the inter-Node MCG mobility operation and the inter-Node SCG mobility operation described above are triggered by the SN, or by the terminal based on a network configuration condition, the MN does not know which candidate SN (i.e., the target SN) is accessed by the terminal, and therefore cannot forward the SN RRC reconfiguration complete message to the target SN. Therefore, how the MN determines the candidate SN accessed by the terminal has become an urgent problem to be solved.

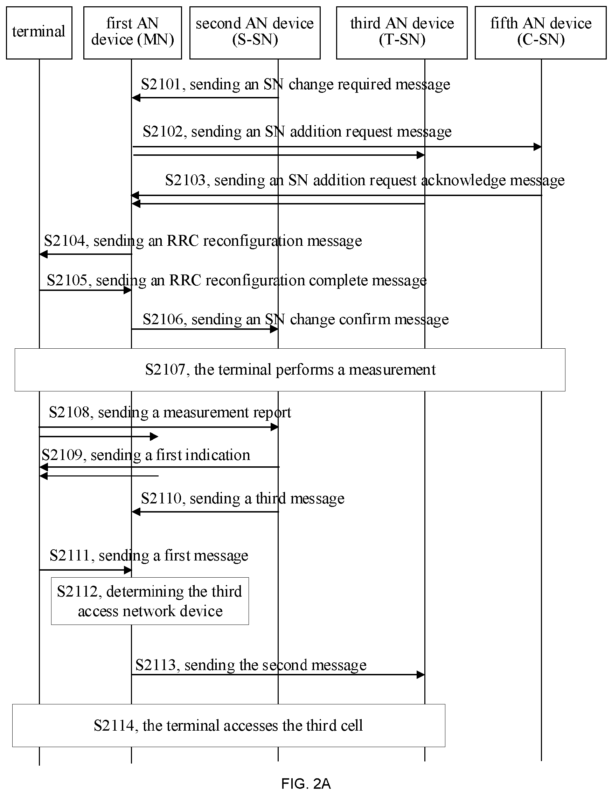

FIG. 2A is a schematic interaction diagram illustrating a message transmission method according to an embodiment of the present disclosure.

To more clearly illustrate optional technical solutions of embodiments of the present disclosure, the scenario and network elements involved in FIG. 2A may be described first.

As illustrated in FIG. 2A, the access network device involved in this embodiment may include at least one of:
a first access network device, also known as a first node or MN, in which the first access network device includes a first cell, which may also be known as a PCell;
a second access network device, also known as a second node or source SN (S-SN), in which the second access network device includes a second cell, which may also be know as a source PSCell;
a third access network device, also known as a third node, target SN (T-SN), or first candidate SN, in which the third access network device includes a third cell, which may also be known as a target PSCell or a first candidate PSCell; or
a fifth access network device, also known as a fifth node, other candidate SN (C-SN), or second candidate SN, in which the fifth access network device includes a fifth cell, which may also be known as other candidate PSCell or second candidate PSCell. Optionally, there may be one or more fifth access network devices, and there may also be one or more fifth cells; the candidate SNs may include the third access network device and the fifth access network device; that is, the fifth access network device may be one or more other candidate SNs other than the third access network device.

In some embodiments, the names of the third access network device and the fifth access network device may be interchanged. For example, during the mobility operation, in a case that the third cell is determined as the target PSCell, the third access network device is the target SN. For another example, during the mobility operation, in a case that the fifth cell is determined as the target PSCell, the fifth access network device is the target SN. In some embodiments, the candidate SN may also include only one candidate SN, for example, it may include only the third access network device.

In some embodiments, the access network devices may all be different access network devices.

As illustrated in FIG. 2A, a terminal may be one supporting the dual connection. The terminal may perform the mobility operation, which may include an SCG mobility operation, such as an inter-SN SCG mobility operation. The SCG mobility operation may include a PSCell change or a PSCell addition.

In some embodiments, the mobility operation may be triggered by the terminal or the second access network device (SN).

In some embodiments, a mobility may be an LTM, and an SCG mobility may be an SCG LTM.

In some embodiments, the mobility operation may be the mobility operation (e.g., the cell change or addition) triggered based on the LTM, which may be referred to as an LTM cell switch.

For example, the mobility operation may be the cell change or addition triggered by the terminal based on the LTM, or the mobility operation may be the cell change triggered by the second access network device based on the LTM.

In some embodiments, the SCG mobility operation may include the PSCell change. Before performing the mobility operation, the terminal may access a first MCG and a first SCG. A PCell of the first MCG may be the first cell, and a PSCell of the first SCG may be the second cell. The target SCG for the PSCell change performed by the terminal is a second SCG, and a PSCell of the second SCG may be the third cell. That is, the scenario of this embodiment is that the terminal expects to perform the PSCell change, i.e., changing a PSCell of an SCG from the second cell (source PSCell) within the second access network device to the third cell (target PSCell) within the third access network device. The second access network device is different from the third access network device.

In other embodiments, the SCG mobility operation may include the PSCell addition. Before performing the mobility operation, the terminal may access the first MCG, and a PCell of the first MCG may be the first cell. The target SCG for the PSCell addition performed by the terminal is the second SCG, and a PSCell of the second SCG may be the third cell. That is, the scenario of this embodiment is that the terminal expects to perform the PSCell addition and add the second SCG. The PSCell of the second SCG is the third cell (target PSCell) within the third access network device.

As illustrated in FIG. 2A, the message transmission method may be performed by the terminal and/or access network device in the communication system. The method may include the following steps.

In step S2101, the second access network device sends an SN change required message to the first access network device.

In some embodiments, the first access network device may receive the SN change required message sent by the second access network device. For example, the first access network device may receive the SN change required message sent by the second access network device via an Xn interface.

In some embodiments, the SN change required message may be configured to request for changing the SN.

In some embodiments, the SN change required message may be configured to request to trigger an inter-SN SCG mobility operation.

In some embodiments, the name of the SN change required message is not limited, and may be, for example, "SN change required message", "SN change request message", "SCG mobility operation required message", "SCG change required message", etc.

In some embodiments, the terms such as "message" and "information", "signal", "signaling", "report", "configuration", "indication", "instruction", "command", "parameter", "field", "data", etc., may be used interchangeably.

Optionally, the step S2101 may be omitted in a PSCell addition scenario.

In some embodiments of the present disclosure, the SN change required message may include candidate information corresponding to at least one candidate PSCell, and candidate information corresponding to the candidate PSCell may include at least one of:
cell identifier information of the candidate PSCell, such as a PCI and/or a CGI.
a device identifier of the access network device to which the candidate PSCell belongs;
cell measurement result information of the candidate PSCell, such as a signal strength of the candidate PSCell, in which the signal strength may include at least one of an RSRP, an SINR, or an RSRQ; or
cell configuration information of the candidate PSCell, such as a frequency point, a bandwidth and other information.

In some embodiments, the first access network device may determine at least one candidate PSCell corresponding to the SCG mobility operation performed by the terminal according to the SN change required message, and determine a candidate access network device (e.g., the third access network device and/or the fifth access network device) corresponding to the candidate PSCell.

In other embodiments, for the PSCell addition scenario, the first access network device may independently determine the third access network device and/or the fifth access network device. Optionally, the first access network device may receive a measurement report sent by the terminal, determine at least one candidate PSCell according to the measurement report, and determine the candidate access network device (e.g., the third access network device and/or the fifth access network device) corresponding to the candidate PSCell.

In some embodiments, the terminal may send the measurement report to the second access network device, and the second access network device may, in response to receiving the measurement report, send the SN change required message to the first access network device.

For example, the measurement report may be obtained by the terminal based on a layer 3 measurement for a radio resource management (RRM).

In step S2102, the first access network device sends an SN addition request message to the third access network device and/or the fifth access network device.

In some embodiments, the third access network device and/or the fifth access network device may receive the SN addition request message sent by the first access network device. For example, the third access network device and/or the fifth access network device may receive the SN addition request message sent by the first access network device via the Xn interface.

In some embodiments, the SN addition request message may be configured to request for adding the SN.

In some embodiments, the name of the SN addition request message is not limited, and may be, for example, "SN addition indication message", "SN addition request message", etc.

In some embodiments, the first access network device may send the SN addition request message to the third access network device and/or the fifth access network device in response to the SN change required message. In this embodiment, the mobility operation is initiated by the second access network device (SN).

In some embodiments, the terminal may send the measurement report to the first access network device, and the first access network device may, in response to receiving the measurement report, send the SN addition request message to the third access network device and/or the fifth access network device. In this embodiment, the mobility operation is initiated by the first access network device. At this point, the step S2101 may be omitted.

For example, the measurement report is obtained by the terminal based on the layer 3 measurement for the RRM.

In some embodiments, the third access network device and/or the fifth access network device may determine one or more candidate PSCells for the terminal to perform the mobility operation according to the SN addition request message, and determine a candidate configuration of the candidate PSCell.

For example, the candidate configuration of the candidate PSCell may be carried in an SN RRC reconfiguration message, which may include a relevant configuration message for the terminal on the candidate PSCell to perform the mobility operation (e.g., an SCG mobility operation based on the LTM).

For example, the SN RRC reconfiguration message may include mobility configuration information corresponding to the candidate PSCell. The mobility configuration information may include at least one of: a mobility configuration identifier, a cell identifier of the candidate PSCell, or candidate configuration information.

Optionally, the candidate configuration information may include at least one of: radio resource information (e.g., a frequency point, a bandwidth, a channel resource, etc.) allocated to the terminal on a candidate cell, a transmission resource (e.g., a bearer context), security-related information (e.g., encryption and integrity protection parameters needed to establish a secure connection), a triggering condition of the mobility operation (e.g., a triggering event, a triggering threshold, etc.), a mobility operation indication (e.g., adding, changing, deleting), etc.

Optionally, the mobility configuration information may include LTM configuration information.

In step S2103, the third access network device and/or the fifth access network device send an SN addition request acknowledge message to the first access network device.

In some embodiments, the first access network device may receive the SN addition request acknowledge message sent by the third access network device and/or the fifth access network device. For example, the first access network device may receive the SN addition request acknowledge message sent by the third access network device and/or the fifth access network device via the Xn interface.

In some embodiments, the SN addition request acknowledge message may be configured to respond to the SN addition request message.

In some embodiments, the SN addition request acknowledge message may acknowledge the SN addition.

In some embodiments, the name of the SN addition request acknowledge message is not limited, and may be, for example, "SN addition response message", etc.

In some embodiments, the SN addition request acknowledge message may include the candidate PSCell.

In some embodiments, the SN addition request acknowledge message may include candidate configuration(s) corresponding to the one or more candidate PSCells described above.

In some embodiments, the SN addition request acknowledge message may include the SN RRC reconfiguration message.

In some embodiments, in the steps S2102 and S2103, the third access network device and the fifth access network device are not distinguished or may be interchanged. For example, both the third access network device and the fifth access network device are candidate SNs.

In step S2104, the first access network device sends an RRC reconfiguration message to the terminal.

In some embodiments, the terminal may receive the RRC reconfiguration message sent by the first access network device.

In some embodiments, the RRC reconfiguration message may be configured to instruct the terminal to prepare to perform the mobility operation.

In some embodiments, the RRC reconfiguration message may include an MN RRC reconfiguration message and the SN RRC reconfiguration message.

In some embodiments, the SN RRC reconfiguration message is included in the MN RRC reconfiguration message.

In some embodiments, the MN RRC reconfiguration message is included in the RRC reconfiguration message.

In some embodiments, the name of the RRC reconfiguration message is not limited, and may be, for example, "RRC reconfiguration message", "RRC message", "downlink message", "downlink signaling", etc.

In some embodiments, the terminal may perform a preparation phase for the mobility operation (e.g., SCG mobility operation) according to the RRC reconfiguration message. For example, the terminal may measure the candidate PSCell and determine whether to initiate the mobility operation according to the measurement result. For example, the terminal may measure the candidate PSCell and, in a case that a condition is fulfilled, report the measurement report to initiate the mobility operation. A measurement may be an L1 measurement based on the LTM.

Optionally, in a case that the terminal detects that the RRC reconfiguration message is abnormal, or is unable to be used for the mobility operation, it may initiate an RRC reconfiguration failure procedure, such as rolling back to a source configuration or initiating an RRC reconstruction procedure.

In step S2105, the terminal sends an RRC reconfiguration complete message to the first access network device.

In some embodiments, the first access network device may receive the RRC reconfiguration complete message sent by the terminal.

In some embodiments, the RRC reconfiguration complete message may be configured to respond to the RRC reconfiguration message.

In some embodiments, the name of the RRC reconfiguration complete message is not limited, and may be, for example, "RRC message", "uplink message", "uplink signaling", etc.

In step S2106, the first access network device sends an SN change confirm message to the second access network device.

In some embodiments, the second access network device may receive the SN change confirm message sent by the first access network device.

In some embodiments, the SN change confirm message may be configured to respond to the SN change required message.

In some embodiments, the name of the SN change confirm message is not limited, and may be, for example, "SCG mobility operation confirm message", "SN change confirm message", "SN change response message", "SCG mobility operation response message", "SN change response message", etc.

In some embodiments, the second access network device receives the SN change confirm message, and may determine that the terminal has begun a preparation phase of an SN change or the SCG mobility operation (e.g., performing a measurement based on the LTM).

Optionally, the steps S2101 and S2106 are specific steps for the SN initiated inter-SN SCG mobility operation.

In some embodiments, in a case that the SCG mobility operation may be initiated by the second access network device (SN), the steps S2101 and S2106 may be executed.

In other embodiments, in a case that the SCG mobility operation is triggered by the terminal, the steps S2101 and S2106 may not be executed.

In step S2107, the terminal performs a measurement.

In some embodiments, the terminal may perform the measurement based on the LTM according to the LTM configuration provided by the RRC reconfiguration message.

In some embodiments, the terminal may perform an L1 measurement, for example, perform a downlink synchronization L1 measurement and/or an uplink synchronization L1 measurement, on the candidate PSCell according to the LTM configuration provided by the RRC reconfiguration message.

In some embodiments, the terminal may obtain a measurement result, which may include at least one of: an L1-RSRP, an L1-SINR, or an L1-RSRQ.

In step S2108, the terminal sends a measurement report to the first access network device and/or the second access network device.

In some embodiments, the first access network device and/or the second access network device may receive the measurement report sent by the terminal.

In some embodiments, the measurement report may be used by the first access network device and/or the second access network device to determine whether to instruct the terminal to initiate an execution of the mobility operation.

In some embodiments, the name of the measurement report is not limited, and may be, for example, "measurement result report", "measurement result information", etc.

In some embodiments, the measurement report may include the measurement result.

In step S2109, the first access network device and/or the second access network device send a first indication to the terminal.

In some embodiments, the terminal may receive the first indication sent by the first access network device and/or the second access network device.

In some embodiments, the first indication may be configured to instruct the terminal to perform the mobility operation (e.g., the SCG mobility operation).

In some embodiments, the name of the first indication is not limited, and may be, for example, "mobility operation indication", "mobility operation command", "cell switch command", "cell change command", "cell addition command", "cell deletion command", "cell switch indication", "cell change indication", "cell addition indication", "cell deletion indication", etc.

In some embodiments, the first indication may be an MAC CE message.

In some embodiments, the first indication may be configured to determine the third cell. The terminal may determine the third cell and the third access network device to which the third cell belongs according to the first indication, and use the third cell as the target PSCell to perform the mobility operation.

In some embodiments, the mobility operation described above may be actively triggered by the terminal based on a condition. For example, the mobility operation may be a conditional LTM.

For example, the first access network device may configure the candidate cell and the triggering condition for the terminal, for example, it may configure the candidate cell and the triggering condition for the terminal via the RRC reconfiguration message in the step S2104 described above. The terminal may perform the measurement, determine the third cell (i.e., the target PSCell) according to the triggering condition, and actively trigger the PSCell change or addition.

Optionally, in a case that the mobility operation may be actively triggered by the terminal based on the condition, the steps S2108 and S2109 may be omitted.

In step S2110, the second access network device sends a third message to the first access network device.

In some embodiments, the first access network may receive the third message sent by the second access network device. Optionally, the first access network may receive the third message sent by the second access network device via the Xn interface.

In some embodiments, the third message may be configured to determine the third access network device. The third access network device is the access network device to which the third cell belongs, and the third cell is a target cell of the PSCell change or addition. The third access network device may also be referred to as the target SN.

In some embodiments, the third access network device may be the target SN determined from the candidate SNs, which may include the third access network device and the fifth access network device. Optionally, the third access network device may be the target SN determined by the terminal from the candidate SNs, or the third access network device may be the target SN determined by the second access network device (source SN) from the candidate SNs, or the third access network device may be the target SN determined by the first access network device (MN) from the candidate SNs.

In some embodiments, the name of the third message is not limited, and may be, for example, "cell switch notification", "cell change notification", etc.

In some embodiments, the third message may be an Xn message between access network devices. In some embodiments, the third message may directly or indirectly include at least one of:
an access network device identifier for indicating the third access network device;
a target cell identifier for indicating the third cell;
target cell information, including frequency information and/or a cell identifier corresponding to the third cell, in which the frequency information may include the frequency point and/or frequency band, and the cell identifier may include the PCI and/or the CGI;
a mobility configuration identifier for indicating mobility configuration information corresponding to the SCG mobility operation performed by the terminal;
TCI state information for indicating beam information of the third cell; or
a first inter-node RRC message.

For example, indirect inclusion means that the third message may include certain information or messages that may include at least one of the foregoing items.

In an embodiment, the first inter-node RRC message includes at least one of:
the target cell identifier for indicating the third cell;
the target cell information, including the frequency information and/or the cell identifier corresponding to the third cell, in which the frequency information may include the frequency point and/or frequency band, and the cell identifier may include the PCI and/or the CGI;
the mobility configuration identifier for indicating the mobility configuration information corresponding to the SCG mobility operation performed by the terminal; or
the TCI state information for indicating the beam information of the third cell.

For example, the third message includes the first inter-node RRC message, which includes information related to a target node or cell that the terminal accesses.

In an implementation, the mobility configuration identifier may include an LTM configuration identifier (e.g., LTM configuration ID), and the LTM configuration identifier indicates LTM configuration information corresponding to the SCG mobility operation performed by the terminal. Optionally, the LTM configuration information may correspond to the third cell.

Optionally, the access network device identifier may also be referred to as a target access network node identifier (target S-NG-RAN node ID), the target cell identifier may also be referred to as a PSCell ID, the target cell information may also be referred to as LTM cell switch information, and the TCI state information may include a TCI state ID.

Optionally, the third message may also include at least one of:
a message type for indicating a type of a Xn message, which may be used to define the purpose and function of the message;
a first node identifier for indicating a M-NG-RAN node UE XnAP ID; or
a second node identifier for indicating a S-NG-RAN node UE XnAP ID.

In this way, the cell or third access network device may be determined via the third message.

Optionally, the step S2110 may also be a specific step in the SN-initiated inter-SN SCG mobility operation.

In some embodiments, in a case that the SCG mobility operation is triggered by the second access network device (SN), the step S2110 may be performed.

In some embodiments, in a case that the SCG mobility operation is triggered by the second access network device (SN), the step S2110 may also not be performed.

In some embodiments, in a case that the SCG mobility operation may be triggered by the terminal, the step S2110 may not be performed.

In step S2111, the terminal sends a first message to the first access network device.

In some embodiments, the first access network device may receive the first message sent by the terminal.

In some embodiments, the first message may be a response from the terminal to the MN RRC reconfiguration message in the step S2104.

For example, the first message may be a response to the MN RRC reconfiguration message corresponding to the third cell.

In some embodiments, the first message may be a response from the terminal to a candidate configuration of the third cell. In a case that the terminal performs LTM access to the third cell, the candidate configuration of the third cell is applied to generate the first message.

In some embodiments, the first message may be configured to request the first access network device to send a second message to the third access network device, so that the terminal may access the third cell within the third access network device.

In some embodiments, the name of the first message is not limited, and may be, for example, "first RRC reconfiguration complete message", "MN RRC reconfiguration complete message", "RRC message", "uplink message", "uplink signaling", etc.

In some embodiments, the first message may include the second message, the second message is a message corresponding to the third cell, and the third cell is the target cell of the PSCell change or addition.

In some embodiments, the second message may be a response from the terminal to the SN RRC reconfiguration message in the step S2104.

In some embodiments, the second message may be configured to request the third access network device corresponding to the third cell to allocate a resource and configure related parameter(s) for the terminal.

In some embodiments, the name of the second message is not limited, and may be, for example, "second RRC reconfiguration complete message", "SN RRC reconfiguration complete message", "RRC message", "uplink message", "uplink signaling", etc.

In some embodiments, the first message may further include at least one of:
target cell information, including frequency information and/or cell identifier corresponding to the third cell, in which the frequency information may include the frequency point and/or frequency band, and the cell identifier may include the PCI and/or the CGI; or
a mobility configuration identifier for indicating mobility configuration information corresponding to the SCG mobility operation performed by the terminal.

In an implementation, the mobility configuration identifier may include an LTM configuration identifier, which is used to indicate LTM configuration information corresponding to the SCG mobility operation performed by the terminal.

Optionally, the LTM configuration information may correspond to the third cell.

In this way, the cell or third access network device may be determined via any one of the foregoing items in the first message.

In some embodiments, the first message is the RRC reconfiguration complete message, and a parameter may be added to the RRC reconfiguration complete message that carries the target cell information and/or mobility configuration identifier.

For example, the parameter 'selectedLTMCandidate' may be added to the RRC reconfiguration complete message. The selectedLTMCandidate may be the LTM configuration identifier, i.e., the LTM configuration identifier of the LTM configuration information applied when performing the SCG mobility operation.

For example, the name of the selectedLTMCandidate, is only an example, which is not limited in the present disclosure. Any parameter with similar function or content to this parameter is within the scope of the present disclosure.

Optionally, the LTM configuration information may be LTM configuration information sent by the first access network device to the terminal. Optionally, selectedLTMCandidate is an optional parameter.

For another example, the parameter 'selectedPSCellForSCGLTM' may be added to the RRC reconfiguration complete message. The selectedPSCellForSCGLTM may be the target cell information. For example, the selectedPSCellForSCGLTM may include frequency information (ssbFrequency) and/or a cell identifier (CellId), and optionally, the cell identifier may include a physical cell identifier (physCellId). Optionally, the selectedPSCellForSCGLTM is an optional parameter.

For example, the name of the selectedPSCellForSCGLTM, is only an example, which is not limited in the present disclosure. Any parameter with similar function or content to this parameter is within the scope of the present disclosure.

In some embodiments, the first message may include a first parameter and a second parameter, and the first parameter indicates whether the second parameter is configured to determine the third access network device.

For example, in a case that a value of the first parameter is a preset value (e.g., TRUE or 1), the second parameter may be configured to determine the third access network device. For example, the second parameter may be configured to carry the target cell information and/or mobility configuration identifier.

Optionally, the first message is the RRC reconfiguration complete message, the first parameter is a newly added parameter and may occupy one bit, and the second parameter may reuse an existing parameter in the RRC reconfiguration complete message, such as selectedPSCellForSCGLTM.

In this way, the message from relevant protocol may be reused to determine the third access network device, saving the signaling overhead of the first message.

For example, the names of the parameters such as first parameter, second parameter, and selectedPSCellForSCGLTM, are only examples, which are not limited in the present disclosure. Any parameters with similar function or content to these parameters are within the scope of the present disclosure.

In step S2112, the first access network device determines the third access network device.

In some embodiments, the first access network device may determine the third access network device according to the first message described above.

Optionally, the first access network device may determine the third access network device according to at least one of the target cell information or the mobility configuration identifier in the first message.

For example, the first access network device may determine the third access network device corresponding to the third cell according to the target cell information.

For example, the first access network device may determine a target cell corresponding to a mobility configuration according to the mobility configuration identifier, and use the access network device to which the target cell belongs as the third access network device.

In other embodiments, the first access network device may determine the third access network device according to the third message.

Optionally, the first access network device may determine the third access network device according to at least one of the access network device identifier, the target cell identifier, the target cell information, the mobility configuration identifier, or the TCI state information in the third message.

For example, the first access network device may determine an access network device corresponding to the access network device identifier as the third access network device.

For example, the first access network device may determine the third access network device corresponding to the third cell according to the target cell identifier or the target cell information.

For example, the first access network device may determine a target cell corresponding to the mobility configuration or TCI state information, according to the mobility configuration identifier, and use the access network device to which the target cell belongs as the third access network device.

In some embodiments, in a case that the step S2110 is omitted, the first access network device may determine the third access network device according to the first message.

In step S2113, the first access network device sends the second message to the third access network device.

In some embodiments, the third access network device may receive the second message sent by the first access network device. For example, the third access network device may receive the second message sent by the first access network device via the Xn interface.

In some embodiments, the name of the second message is not limited, and may be, for example, "second RRC reconfiguration complete message", "SN RRC reconfiguration complete message", "RRC message", "uplink message", "uplink signaling", etc.

In some embodiments, the second message may be encapsulated in a message container of the Xn interface.

In some embodiments, the third access network device may allocate a radio resource for the terminal in the third cell according to the second message, so as to realize the PSCell change or addition.

In step S2114, the terminal accesses the third cell.

In some embodiments, the terminal may perform a random access and access the third cell.

Optionally, in a case that the SCG mobility operation is the PSCell change, that is, the PSCell of the terminal is changed from the second cell to the third cell, the terminal may also disconnect from the second cell.

The methods involved in embodiments of the present disclosure may include at least one of the steps S2101 to S2114 described above. For example, the step S2110 may be implemented as an independent embodiment, the step S2111 may be implemented as an independent embodiment, the step S2112 may be implemented as an independent embodiment, the steps S2110 and S2112 may be implemented as an independent embodiment, the steps S2111 and S2112 may be implemented as an independent embodiment, the steps S2111 to S2113 may be implemented as an independent embodiment, the steps S2110 to S2113 may be implemented as an independent embodiment, the steps S2109 to S2113 may be implemented as an independent embodiment, the steps S2109 to S2114 may be implemented as an independent embodiment, and the steps S2102 to S2114 may be implemented as an independent embodiment, which is not limited herein.

In some embodiments, the steps S2101 to S2114 may be executed in an exchanged order or simultaneously. For example, the steps S2109 and S2110 may be executed in an exchanged order or simultaneously. For another example, the steps S2110 and S2111 may be executed in an exchanged order or simultaneously. For another example, the steps S2111 and S2114 may be executed in an exchanged order or simultaneously.

In some embodiments, steps S2101 to S2114 are all optional steps.

In some embodiments, reference may be made to other optional implementations described before or after the description corresponding to FIG. 2A.

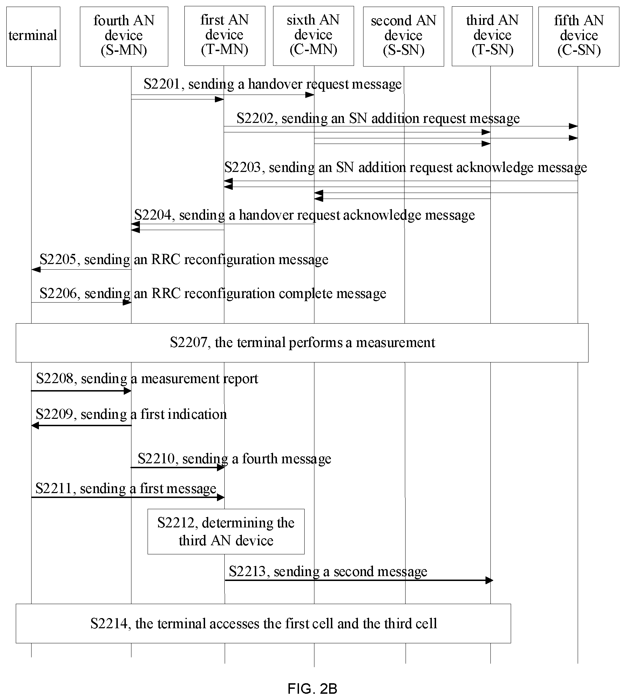

FIG. 2B is a schematic interaction diagram illustrating a message transmission method according to an embodiment of the present disclosure.

To more clearly illustrate optional technical solutions of embodiments of the present disclosure, the scenario and network elements involved in FIG. 2B may be described first.

As illustrated in FIG. 2B, the access network device involved in this embodiment includes at least one of:
a first access network device, also known as a first node, target MN (T-MN), or first candidate MN, in which the first access network device includes a first cell, which may also be known as a target PCell or a first candidate PCell;
a second access network device, also known as a second node or source SN (S-SN), in which the second access network device includes a second cell, which may also be known as a source PSCell;
a third access network device, also known as a third node, target SN (T-SN), or first candidate SN, in which the third access network device includes a third cell, which may also be known as a target PSCell or a first candidate PSCell;
a fourth access network device, also known as a fourth node or source MN (S-MN), in which the fourth access network device includes a fourth cell, which may also be known as a source PCell;
a fifth access network device, also known as a fifth node, other candidate SN (C-SN), or second candidate SN, in which the fifth access network device includes a fifth cell, which may also be known as other candidate PSCell or second candidate PSCell. Optionally, there may be one or more fifth access network devices, and there may also be one or more fifth cells; the candidate SNs may include the third access network device and the fifth access network device; that is, the fifth access network device is other candidate SNs other than the third access network device; or
a sixth access network device, also known as a sixth node, other candidate MN (C-MN), or second candidate MN, in which the sixth access network device includes a sixth cell, which may also be known as other candidate PCell or a second candidate PCell. Optionally, there may be one or more sixth access network devices, and there may also be one or more sixth cells; the candidate MNs may include the first access network device and the sixth access network device; that is, the sixth access network device is other candidate MNs other than the first access network device.

In some embodiments, the names of the third access network device and the fifth access network device may be interchanged. For example, during the mobility operation, in a case that the third cell is determined as the target PSCell, the third access network device is the target SN. For another example, during the mobility operation, in a case that the fifth cell is determined as the target PSCell, the fifth access network device is the target SN. In some embodiments, the candidate SN may also include only one candidate SN, for example, it may include only the third access network device.

In some embodiments, the names of the first access network device and the sixth access network device may be interchanged. For example, during the mobility operation, in a case that the first cell is determined as the target PCell, the first access network device is the target MN. For another example, during the mobility operation, in a case that the sixth cell is determined as the target PCell, the sixth access network device is the target MN. In some embodiments, the candidate MN may also include only one candidate MN, for example, it may include only the first access network device.

In some embodiments, the access network devices may all be different access network devices.

As illustrated in FIG. 2B, a terminal may be one supporting the dual connection. The terminal may perform the mobility operation, which may include an MCG mobility operation and an SCG mobility operation, such as an inter-MN MCG mobility operation and an inter-SN SCG mobility operation. The MCG mobility operation may include a PCell change, and the SCG mobility operation may include a PSCell change or a PSCell addition. For example, the mobility operation involved in FIG. 2B may include the PCell change and the PSCell change; or the mobility operation involved in FIG. 2B may include the PCell change and the PSCell addition.

In some embodiments, the mobility operation may be triggered by the terminal or the fourth access network device (S-MN).

In some embodiments, a mobility may be an LTM, an MCG mobility may be an MCG LTM, and an SCG mobility may be an SCG LTM.

In some embodiments, the mobility operation may be a mobility operation (e.g., the cell change or addition) triggered based on an LTM, which may be referred to as an LTM cell switch.

For example, the mobility operation may be a mobility operation triggered by the terminal based on the LTM, or the mobility operation may be a mobility operation triggered by the fourth access network device based on the LTM.

In some embodiments, the MCG mobility operation may include the PCell change, and the SCG mobility operation may include the PSCell change; that is, the mobility operation involved in FIG. 2B includes the PCell change and the PSCell change. For example, before performing the mobility operation, the terminal may access a second MCG and a first SCG. A PCell of the second MCG may be the fourth cell, and a PSCell of the first SCG may be the second cell. A target MCG for the PCell change performed by the terminal is a first MCG, and a PCell of the first MCG may be the first cell. A target SCG for the PSCell change performed by the terminal is a second SCG, and a PSCell of the second SCG may be the third cell. That is, the scenario of this embodiment is that the terminal expects to perform the PCell change and the PSCell change, i.e., changing a PCell of an MCG from the fourth cell (source PCell) within the fourth access network device to the first cell (target PCell) within the first access network device, and changing a PSCell of an SCG from the second cell (source PSCell) within the second access network device to the third cell (target PSCell) within the third access network device. The fourth access network device is different from the first access network device, and the second access network device is different from the third access network device.

In some embodiments, the MCG mobility operation may include the PCell change, and the SCG mobility operation may include the PSCell addition; that is, the mobility operation involved in FIG. 2B includes the PCell change and the PSCell addition. For example, before performing the mobility operation, the terminal may access a second MCG, and a PCell of the second MCG may be the fourth cell. A target MCG for the PCell change performed by the terminal is a first MCG, and a PCell of the first MCG may be the first cell. A target SCG for the PSCell addition performed by the terminal is a second SCG, and a PSCell of the second SCG may be the third cell. That is, the scenario of this embodiment is that the terminal expects to perform the PCell change and the PSCell addition, i.e., changing a PCell of an MCG from the fourth cell (source PCell) within the fourth access network device to the first cell (target PCell) within the first access network device, and adding the second SCG. The PSCell of the second SCG is the third cell (target PSCell) within the third access network device. The fourth access network device is different from the first access network device.

As illustrated in FIG. 2B, the message transmission method may be performed by the terminal and/or access network device in the communication system. The method may include the following steps.

In step S2201, the fourth access network device sends a handover request message to the first access network device and/or the sixth access network device.

In some embodiments, the first access network device and/or the sixth access network device may receive the handover request message sent by the fourth access network device. For example, the first access network device and/or the sixth access network device may receive the handover request message sent by the fourth access network device via an Xn interface.

In some embodiments, the handover request message may be configured to request the mobility operation.

In some embodiments, the name of the handover request message is not limited, and may be, for example, "mobility operation request message", "node change required message", etc.

In some embodiments, the terminal may send a measurement report to the fourth access network device, and the fourth access network device may, in response to receiving the measurement report, send the handover request message to the first access network device.

For example, the measurement report may be obtained by the terminal based on a layer 3 measurement for an RRM.

In step S2202, the first access network device and/or the sixth access network device send an SN addition request message to the third access network device and/or the fifth access network device.

In some embodiments, the first access network device may send the SN addition request message to the third access network device and/or the fifth access network device. In some embodiments, the sixth access network device may send the SN addition request message to the third access network device and/or the fifth access network device.

In some embodiments, the third access network device and/or the fifth access network device may receive the SN addition request message. For example, the third access network device and/or the fifth access network device may receive the SN addition request message via the Xn interface.

In some embodiments, for an optional implementation of the SN addition request message, reference may be made to the optional implementation of FIG. 2A, which will not be repeated here.

In step S2203, the third access network device and/or the fifth access network device send an SN addition request acknowledge message to the first access network device and/or the sixth access network device.

In some embodiments, the third access network device may send the SN addition request acknowledge message to the first access network device and/or the sixth access network device. In some embodiments, the fifth access network device sends the SN addition request acknowledge message to the first access network device and/or the sixth access network device.

In some embodiments, the first access network device and/or the sixth access network device may receive the SN addition request acknowledge message. For example, the first access network device and/or the sixth access network device may receive the SN addition request acknowledge message via the Xn interface.

In some embodiments, for an optional implementation of the SN addition request acknowledge message, reference may be made to the optional implementation of FIG. 2A, which will not be repeated here.

In some embodiments, in the steps S2202 and S2203, the third access network device and the fifth access network device are not distinguished or may be interchanged. For example, both the third access network device and the fifth access network device are candidate SNs.

In step S2204, the first access network device and/or the sixth access network device send a handover request acknowledge message to the fourth access network device.

In some embodiments, the fourth access network device may receive the handover request acknowledge message sent by the first access network device and/or the sixth access network device.

In some embodiments, the handover request acknowledge message may be configured to respond to the handover request message described above.

In some embodiments, after receiving the handover request acknowledge message, the fourth access network device may determine that the first access network device and/or the sixth access network device may be a target MN for handover, and may continue to execute the following step S2205.

In some embodiments, in the steps S2201 to S2104, the first access network device and the sixth access network device are not distinguished or may be interchanged. For example, both the first access network device and the sixth access network device are candidate MNs.

In step S2205, the fourth access network device sends an RRC reconfiguration message to the terminal.

In some embodiments, the terminal may receive the RRC reconfiguration message sent by the fourth access network device.

In some embodiments, for an optional implementation of the RRC reconfiguration message, reference may be made to the optional implementation of FIG. 2A, which will not be repeated here.

In step S2206, the terminal sends an RRC reconfiguration complete message to the fourth access network device.

In some embodiments, the fourth access network device may receive the RRC reconfiguration complete message sent by the terminal.

In some embodiments, for an optional implementation of the RRC reconfiguration complete message, reference may be made to the optional implementation of FIG. 2A, which will not be repeated here.

In step S2207, the terminal performs a measurement.

In some embodiments, the terminal may perform a measurement based on the LTM according to the RRC reconfiguration message.

In some embodiments, the terminal may perform an L1 measurement, for example, perform a downlink synchronization L1 measurement and/or an uplink synchronization L1 measurement, on a candidate PSCell according to the RRC reconfiguration message.

In some embodiments, the terminal may obtain a measurement result, which may include at least one of: an L1-RSRP, an L1-SINR, or an L1-RSRQ.

In step S2208, the terminal sends a measurement report to the fourth access network device.

In some embodiments, the fourth access network device may receive the measurement report sent by the terminal.

In some embodiments, for an optional implementation of the measurement report, reference may be made to the optional implementation of FIG. 2A, which will not be repeated here.

In step S2209, the fourth access network device sends a first indication to the terminal.

In some embodiments, the terminal may receive the first indication sent by the fourth access network device.

In some embodiments, the first indication may be configured to instruct the terminal to perform the mobility operation (e.g., the SCG mobility operation).

In some embodiments, the name of the first indication is not limited, and may be, for example, "mobility operation indication", "mobility operation command", "cell switch command", "cell change command", "cell addition command", "cell deletion command", "cell switch indication", "cell change indication", "cell addition indication", "cell deletion indication", etc.

In some embodiments, the mobility operation described above may be actively triggered by the terminal based on a condition. For example, the mobility operation may be a conditional LTM.

For example, the first access network device may configure the candidate cell and the triggering condition for the terminal, for example, it may configure the candidate cell and the triggering condition for the terminal via the RRC reconfiguration message in the step S2204. The terminal may perform the measurement, determine the first cell (target PCell) and the third cell (target PSCell) according to the triggering condition, and actively trigger the PCell change and the PSCell change or addition.

Optionally, in a case that the mobility operation may be actively triggered by the terminal based on the condition, the steps S2208 and S2209 may be omitted.

In step S2210, the fourth access network device sends a fourth message to the first access network device.

In some embodiments, the first access network device may receive the fourth message sent by the fourth access network device. Optionally, the first access network device may receive the fourth message sent by the fourth access network device via the Xn interface.

In some embodiments, the first access network device may be the target MN determined from the candidate MNs, which may include the first access network device and the sixth access network device. Optionally, the first access network device may be the target MN determined by the terminal from the candidate MNs, or the first access network device may be the target MN determined by the fourth access network device (source MN) from the candidate MNs.

In some embodiments, the fourth message may be configured to determine the third access network device. The third access network device is the access network device to which the third cell belongs, and the third cell is a target cell of the PSCell change or addition. This third access network device may also be referred to as the target SN.

In some embodiments, the third access network device may be the target SN determined from the candidate SNs, which may include the third access network device and the fifth access network device. Optionally, the third access network device may be the target SN determined by the terminal from the candidate SNs, or the third access network device may be the target SN determined by the second access network device (source SN) from the candidate SNs, or the third access network device may be the target SN determined by the first access network device (MN) from the candidate SNs.

In some embodiments, the name of the fourth message is not limited, and may be, for example, "cell switch notification", "cell change notification", etc.

In some embodiments, the fourth message may be an Xn message between access network devices.

In some embodiments, the fourth message may directly or indirectly include at least one of:
an access network device identifier for indicating the third access network device;
a target cell identifier for indicating the third cell;
target cell information, including frequency information and/or a cell identifier corresponding to the third cell, in which the frequency information may include a frequency point and/or frequency band, and the cell identifier may include a PCI and/or a CGI;
a mobility configuration identifier for indicating mobility configuration information corresponding to the SCG mobility operation performed by the terminal;
TCI state information for indicating beam information of the third cell; or
a second inter-node RRC message.

For example, indirect inclusion means that the fourth message may include certain information or messages that may include at least one of the foregoing items.

In an embodiment, the second inter-node RRC message includes at least one of:
the target cell identifier for indicating the third cell;
the target cell information, including the frequency information and/or the cell identifier corresponding to the third cell, in which the frequency information may include the frequency point and/or frequency band, and the cell identifier may include the PCI and/or the CGI;
the mobility configuration identifier for indicating the mobility configuration information corresponding to the SCG mobility operation performed by the terminal; or
the TCI state information for indicating the beam information of the third cell.

For example, the fourth message includes the second inter-node RRC message, which includes information related to a target node or cell that the terminal accesses.

In an implementation, the mobility configuration identifier may include an LTM configuration ID, and the LTM configuration ID indicates LTM configuration information corresponding to the SCG mobility operation performed by the terminal. Optionally, the LTM configuration information may correspond to the third cell.

Optionally, the access network device identifier may also be referred to as a target access network node identifier (Target S-NG-RAN node ID), the target cell identifier may also be referred to as a PSCell ID, the target cell information may also be referred to as LTM cell switch information, and the TCI state information may include a TCI state ID.

Optionally, the fourth message may also include at least one of:
a message type for indicating a type of a Xn message, which may be used to define the purpose and function of the message;
a first node identifier for indicating an M-NG-RAN node UE XnAP ID; or
a second node identifier for indicating an S-NG-RAN node UE XnAP ID.

In this way, the cell or third access network device may be determined via the fourth message.

Optionally, the fourth message may be the same type of the Xn message as the third message in the embodiment of FIG. 2A.

In step S2211, the terminal sends a first message to the first access network device.

In some embodiments, the first access network device may receive the first message sent by the terminal.

In some embodiments, for an optional implementation of the first message, reference may be made to the optional implementation of FIG. 2A, which will not be repeated here.

In step S2212, the first access network device determines the third access network device.

In some embodiments, the first access network device may determine the third access network device according to the first message described above.

Optionally, the first access network device may determine the third access network device according to at least one of the target cell information or the mobility configuration identifier in the first message.

For example, the first access network device may determine the third access network device corresponding to the third cell according to the target cell information.

For example, the first access network device may determine a target cell corresponding to a mobility configuration according to the mobility configuration identifier, and use the access network device to which the target cell belongs as the third access network device.

In other embodiments, the first access network device may determine the third access network device according to the fourth message.

Optionally, the first access network device may determine the third access network device according to at least one of the access network device identifier, the target cell identifier, the target cell information, the mobility configuration identifier, or the TCI state information in the fourth message.

For example, the first access network device may determine an access network device corresponding to the access network device identifier as the third access network device.

For example, the first access network device may determine the third access network device corresponding to the third cell based on the target cell identifier or the target cell information.

For example, the first access network device may determine a target cell corresponding to the mobility configuration or TCI state information according to the mobility configuration identifier, and use the access network device to which the target cell belongs as the third access network device.

In step S2213, the first access network device sends a second message to the third access network device.

In some embodiments, the third access network device may receive the second message sent by the first access network device. For example, the third access network device may receive the second message sent by the first access network device via the Xn interface.

In some embodiments, the name of the second message is not limited, and may be, for example, "second RRC reconfiguration complete message", "SN RRC reconfiguration complete message", "RRC message", "uplink message", "uplink signaling", etc.

In some embodiments, the second message may be encapsulated in a message container of the Xn interface.

In some embodiments, the third access network device may allocate a radio resource for the terminal in the third cell according to the second message, so as to realize the PSCell change or addition.

In step S2214, the terminal accesses the first cell and the third cell.

In some embodiments, the terminal may perform a random access and access the first cell.

In some embodiments, the terminal may perform the random access and access the third cell.

Optionally, in a case that the mobility operation includes the PCell change, that is, the PCell of the terminal is changed from the fourth cell to the first cell, the terminal may also disconnect from the fourth cell.

Optionally, in a case that the mobility operation includes the PSCell change, that is, the PSCell of the terminal is changed from the second cell to the third cell, the terminal may also disconnect from the second cell.

The methods involved in embodiments of the present disclosure may include at least one of steps S2201 to S2214 described above. For example, the step S2210 may be implemented as an independent embodiment, the step S2211 may be implemented as an independent embodiment, the step S2212 may be implemented as an independent embodiment, the steps S2210 and S2212 may be implemented as an independent embodiment, the steps S2211 and S2212 may be implemented as an independent embodiment, the steps S2211 to S2213 may be implemented as an independent embodiment, the steps S2210 to S2213 may be implemented as an independent embodiment, the steps S2209 to S2213 may be implemented as an independent embodiment, the steps S2209 to S2214 may be implemented as an independent embodiment, the steps S2202 to S2214 may be implemented as an independent embodiment, which is not limited herein.

In some embodiments, the steps S2201 to S2214 may be executed in an exchanged order or simultaneously. For example, the steps S2209 and S2210 may be executed in an exchanged order or simultaneously. For another example, the steps S2210 and S2211 may be executed in an exchanged order or simultaneously. For another example, the steps S2211 and S2214 may be executed in an exchanged order or simultaneously.

In some embodiments, the steps S2201 to S2214 are all optional steps.

In some embodiments, reference may be made to other optional implementations described before or after the description corresponding to FIG. 2A.

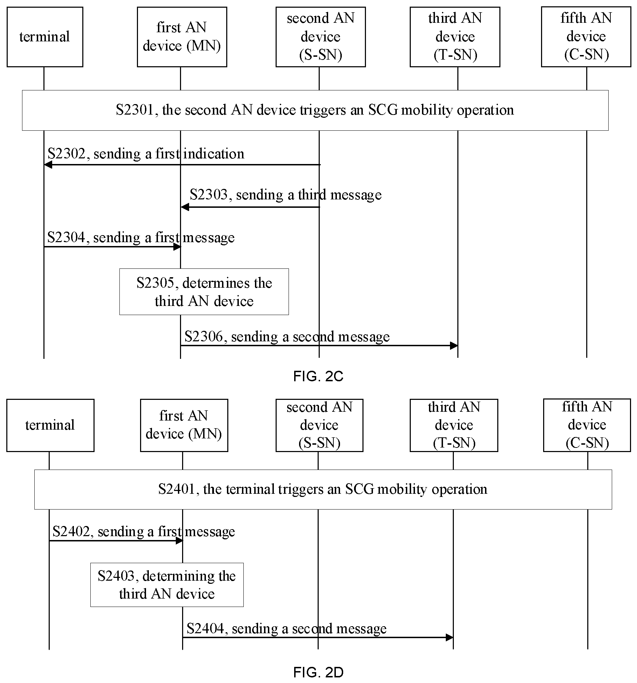

FIG. 2C is a schematic interaction diagram illustrating a message transmission method according to an embodiment of the present disclosure. As illustrated in FIG. 2C, embodiments of the present disclosure relate to the message transmission method, which may be performed by a communication system and may include the following steps.

In step S2301, a second access network device triggers an SCG mobility operation.

An optional implementation of the step S2301 may include one or more of the steps S2101 to S2108 in FIG. 2A. For example, the step S2301 may include steps S2201 to S2208; for another example, the step S2301 may include the steps S2201, S2206, S2207, and S2208.

In step S2302, the second access network device sends a first indication to a terminal.

For an optional implementation of the step S2302, reference may be made to the optional implementation of the step S2109 in FIG. 2A, and other related parts in embodiments involved in FIG. 2A, which will not be repeated here.

In step S2303, the second access network device sends a third message to a first access network device.

For an optional implementation of the step S2303, reference may be made to the optional implementation of the step S2110 in FIG. 2A, and other related parts in embodiments involved in FIG. 2A, which will not be repeated here.

In some embodiments, the step S2303 may be omitted.

In step S2304, the terminal sends a first message to the first access network device.

For an optional implementation of the step S2304, reference may be made to the optional implementation of the step S2111 in FIG. 2A, and other related parts in embodiments involved in FIG. 2A, which will not be repeated here.

In step S2305, the first access network device determines a third access network device.

For an optional implementation of the step S2305, reference may be made to the optional implementation of the step S2112 in FIG. 2A, and other related parts in embodiments involved in FIG. 2A, which will not be repeated here.

In step S2306, the first access network device sends a second message to the third access network device.

For an optional implementation of the step S2306, reference may be made to the optional implementation of the step S2113 in FIG. 2A, and other related parts in embodiments involved in FIG. 2A, which will not be repeated here.

In some embodiments, the steps are all optional steps.

In some embodiments, the embodiments illustrated in FIG. 2C may also be combined with any one or more steps in the embodiments illustrated in FIG. 2A as a new embodiment.

FIG. 2D is a schematic interaction diagram illustrating a message transmission method according to an embodiment of the present disclosure. As illustrated in FIG. 2D, embodiments of the present disclosure relate to the message transmission method, which may be performed by a communication system and may include the following steps.

In step S2401, a terminal triggers an SCG mobility operation.

In some embodiments, an optional implementation of the step S2401 may include one or more of steps S2102 to S2105 of FIG. 2A. For example, the step S2401 may include the steps S2102 to S2105; for another example, the step S2401 may include the steps S2104 and S2105; and for yet another example, the step S2401 may include the step S2104.

In step S2402, the terminal sends a first message to a first access network device.

For an optional implementation of the step S2402, reference may be made to the optional implementation of the step S2111 in FIG. 2A, and other related parts in embodiments involved in FIG. 2A, which will not be repeated here.

In step S2403, the first access network device determines a third access network device.

For an optional implementation of the step S2403, reference may be made to the optional implementation of the step S2112 in FIG. 2A, and other related parts in embodiments involved in FIG. 2A, which will not be repeated here.

In step S2404, the first access network device sends a second message to the third access network device.

For an optional implementation of the step S2404, reference may be made to the optional implementation of the step S2113 in FIG. 2A, and other related parts in embodiments involved in FIG. 2A, which will not be repeated here.

In some embodiments, the steps are all optional steps.

In some embodiments, the embodiments illustrated in FIG. 2D may also be combined with any one or more steps in the embodiments illustrated in FIG. 2A as a new embodiment.

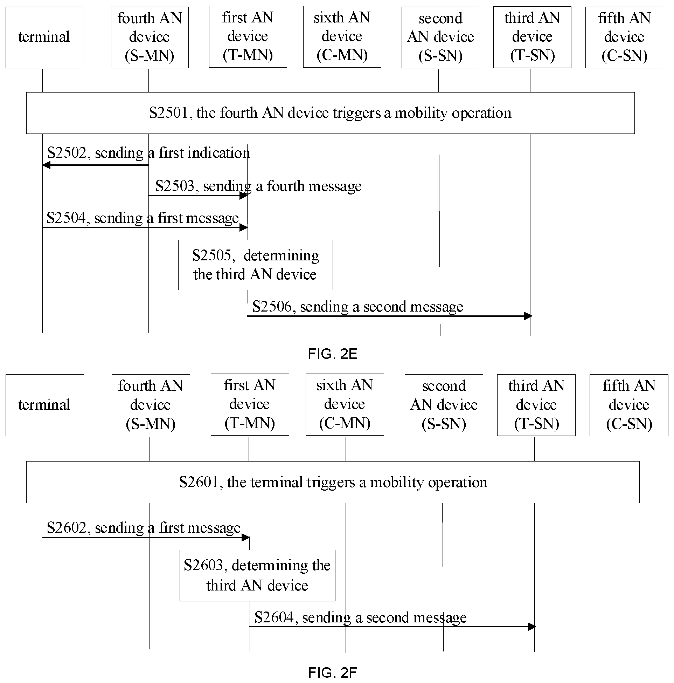

FIG. 2E is a schematic interaction diagram illustrating a message transmission method according to an embodiment of the present disclosure. As illustrated in FIG. 2E, embodiments of the present disclosure relate to the message transmission method, which may be performed by a communication system and may include the following steps.

In step S2501, a fourth access network device triggers a mobility operation.

Optionally, the mobility operation includes an MCG mobility operation and an SCG mobility operation.

An optional implementation of step S2501 may include one or more of the steps S2201 to S2208 in FIG. 2B. For example, the step S2501 may include the steps S2201 to S2208; for another example, the step S2501 may include the steps S2201, S2206, S2207 and S2208.

In step S2502, the fourth access network device sends a first indication to a terminal.

For an optional implementation of the step S2502, reference may be made to the optional implementation of the step S2209 in FIG. 2B, and other related parts in embodiments involved in FIG. 2B, which will not be repeated here.

In step S2503, the fourth access network device sends a fourth message to a first access network device.

For an optional implementation of the step S2503, reference may be made to the optional implementation of the step S2210 in FIG. 2B, and other related parts in embodiments involved in FIG. 2B, which will not be repeated here.

In step S2504, the terminal sends a first message to the first access network device.

For an optional implementation of the step S2504, reference may be made to the optional implementation of the step S2211 in FIG. 2B, and other related parts in embodiments involved in FIG. 2B, which will not be repeated here.

In step S2505, the first access network device determines a third access network device.

For an optional implementation of the step S2505, reference may be made to the optional implementation of the step S2210 in FIG. 2B, and other related parts in embodiments involved in FIG. 2B, which will not be repeated here.

In step S2506, the first access network device sends a second message to the third access network device.

For an optional implementation of the step S2506, reference may be made to the optional implementation of the step S2212 in FIG. 2B, and other related parts in embodiments involved in FIG. 2B, which will not be repeated here.

In some embodiments, the steps are all optional steps.

In some embodiments, the embodiments illustrated in FIG. 2E may also be combined with any one or more steps in the embodiments illustrated in FIG. 2B as a new embodiment.

FIG. 2F is a schematic interaction diagram illustrating a message transmission method according to an embodiment of the present disclosure. As illustrated in FIG. 2F, embodiments of the present disclosure relate to the message transmission method, which may be performed by a communication system and may include the following steps.

In step S2601, a terminal triggers a mobility operation.

Optionally, the mobility operation includes an MCG mobility operation and an SCG mobility operation.

An optional implementation of step S2601 may include one or more of the steps S2201 to S2208 in FIG. 2B. For example, the step S2601 may include the steps S2201 to S2208; for another example, the step S2601 may include the steps S2201, S2206, S2207 and S2208.

In step S2602, the terminal sends a first message to a first access network device.

For an optional implementation of the step S2602, reference may be made to the optional implementation of the step S2211 in FIG. 2B, and other related parts in embodiments involved in FIG. 2B, which will not be repeated here.

In step S2603, the first access network device determines a third access network device.

For an optional implementation of the step S2603, reference may be made to the optional implementation of the step S2212 in FIG. 2B, and other related parts in embodiments involved in FIG. 2B, which will not be repeated here.

In step S2604, the first access network device sends a second message to the third access network device.

For an optional implementation of the step S2604, reference may be made to the optional implementation of the step S2213 in FIG. 2B, and other related parts in embodiments involved in FIG. 2B, which will not be repeated here.

In some embodiments, the steps are all optional steps.

In some embodiments, the embodiments illustrated in FIG. 2F may also be combined with any one or more steps in the embodiments illustrated in FIG. 2B as a new embodiment.

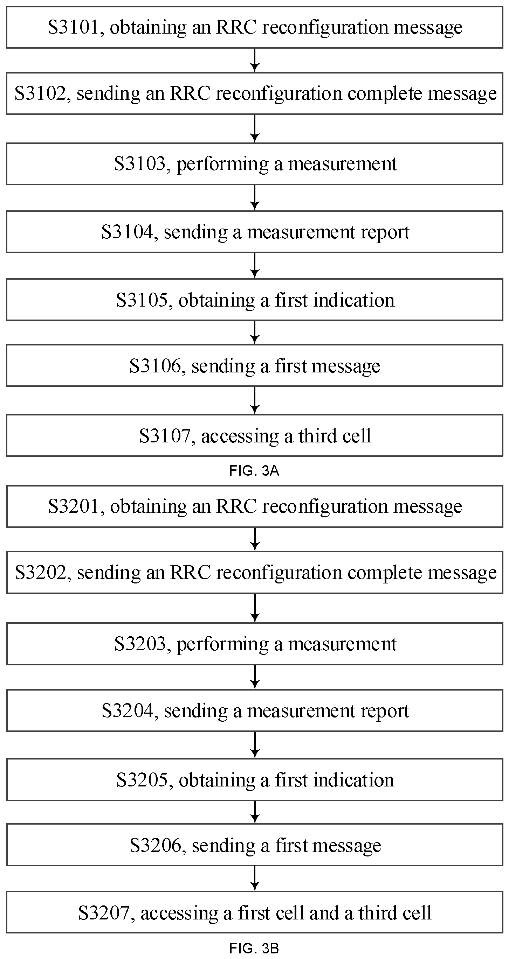

FIG. 3A is a flowchart illustrating a message transmission method according to an embodiment of the present disclosure. As illustrated in FIG. 3A, embodiments of the present disclosure relate to the message transmission method, which may be performed by a terminal. The method may include the following steps.

In step S3101, an RRC reconfiguration message is obtained.

For an optional implementation of the step S3101, reference may be made to the optional implementation of the step S2104 in FIG. 2A, and other related parts in embodiments involved in FIG. 2A, which will not be repeated here.

In some embodiments, the terminal may receive the RRC reconfiguration message sent by a first access network device or other entities, which is not limited in the disclosure.

In some embodiments, the terminal may obtain the RRC reconfiguration message specified by a protocol.

In some embodiments, the terminal may obtain the RRC reconfiguration message from one or more upper layers.

In some embodiments, the terminal may perform processing to obtain the RRC reconfiguration message.

In some embodiments, the step S3101 may be omitted, and the terminal may autonomously implement the function indicated by the RRC reconfiguration message, or the function is set by default.

In step S3102, an RRC reconfiguration complete message is sent.

For an optional implementation of the step S3102, reference may be made to the optional implementation of the step S2105 in FIG. 2A, and other related parts in embodiments involved in FIG. 2A, which will not be repeated here.

In some embodiments, the terminal may send the RRC reconfiguration complete message to the first access network device or other entities, which is not limited in the disclosure.

In step S3103, a measurement is performed.

For an optional implementation of the step S3103, reference may be made to the optional implementation of the step S2107 in FIG. 2A, and other related parts in embodiments involved in FIG. 2A, which will not be repeated here.

In step S3104, a measurement report is sent.

For an optional implementation of the step S3104, reference may be made to the optional implementation of the step S2108 in FIG. 2A, and other related parts in embodiments involved in FIG. 2A, which will not be repeated here.

In some embodiments, the terminal may send the measurement report to a second access network device or other entities, which is not limited in the disclosure. For example, the terminal may send the measurement report to the first access network device, and the first access network device may forward the measurement report to the second access network device.

In step S3105, a first indication is obtained.

For an optional implementation of the step S3105, reference may be made to the optional implementation of the step S2109 in FIG. 2A, and other related parts in embodiments involved in FIG. 2A, which will not be repeated here.

In some embodiments, the terminal may receive the first indication sent by the second access network device or other entities, which is not limited in the disclosure.

In some embodiments, the terminal may obtain the first indication specified by a protocol.

In some embodiments, the terminal may obtain the first indication from one or more upper layers.

In some embodiments, the terminal may perform processing to obtain the first indication.

In some embodiments, the step S3105 may be omitted, and the terminal may autonomously implement the function indicated by the first indication, or the function is set by default.

In step S3106, a first message is sent.

For an optional implementation of the step S3106, reference may be made to the optional implementation of the step S2111 in FIG. 2A, and other related parts in embodiments involved in FIG. 2A, which will not be repeated here.

In some embodiments, the terminal may send the first message to the first access network device or other entities, which is not limited in the disclosure.

In step S3107, a third cell is accessed.

For an optional implementation of the step S3107, reference may be made to the optional implementation of the step S2114 in FIG. 2A, and other related parts in embodiments involved in FIG. 2A, which will not be repeated here.

The methods involved in embodiments of the present disclosure may include at least one of the steps S3101 to S3107 described above. For example, the step S3106 may be implemented as an independent embodiment, the steps S3105 + S3106 may be implemented as an independent embodiment, the steps S3106 and S3107 may be implemented as an independent embodiment, the steps S3101, S3102, S3103, S3105 and S3106 may be implemented as an independent embodiment, and the steps S3101 to S3106 may be implemented as an independent embodiment, which is not limited herein.

In some embodiments, the steps S3101 to S3107 may be executed in an exchanged order or simultaneously.

In some embodiments, steps S3101 to S3107 are all optional steps.

FIG. 3B is a flowchart illustrating a message transmission method according to an embodiment of the present disclosure. As illustrated in FIG. 3B, embodiments of the present disclosure relate to the message transmission method, which may be performed by a terminal. The method may include the following steps.

In step S3201, an RRC reconfiguration message is obtained.

For an optional implementation of the step S3201, reference may be made to the optional implementation of the step S2205 in FIG. 2B, and other related parts in embodiments involved in FIG. 2B, which will not be repeated here.

In some embodiments, the terminal may receive the RRC reconfiguration message sent by a fourth access network device or other entities, which is not limited in the disclosure.

In some embodiments, the terminal may obtain the RRC reconfiguration message specified by a protocol.

In some embodiments, the terminal may obtain the RRC reconfiguration message from one or more upper layers.

In some embodiments, the terminal may perform processing to obtain the RRC reconfiguration message.

In some embodiments, the step S3201 may be omitted, and the terminal may autonomously implement the function indicated by the RRC reconfiguration message, or the function is set by default.

In step S3202, an RRC reconfiguration complete message is sent.

For an optional implementation of the step S3202, reference may be made to the optional implementation of the step S2206 in FIG. 2B, and other related parts in embodiments involved in FIG. 2B, which will not be repeated here.

In some embodiments, the terminal may send the RRC reconfiguration complete message to the fourth access network device or other entities, which is not limited in the disclosure.

In step S3203, a measurement is performed.

For an optional implementation of the step S3203, reference may be made to the optional implementation of the step S2207 in FIG. 2B, and other related parts in embodiments involved in FIG. 2B, which will not be repeated here.

In step S3204, a measurement report is sent.

For an optional implementation of the step S3204, reference may be made to the optional implementation of the step S2208 in FIG. 2B, and other related parts in embodiments involved in FIG. 2B, which will not be repeated here.

In some embodiments, the terminal may send the measurement report to the fourth access network device or other entities, which is not limited in the disclosure.

In step S3205, a first indication is obtained.

For an optional implementation of the step S3205, reference may be made to the optional implementation of the step S2209 in FIG. 2B, and other related parts in embodiments involved in FIG. 2B, which will not be repeated here.

In some embodiments, the terminal may receive the first indication sent by the fourth access network device or other entities, which is not limited in the disclosure.

In some embodiments, the terminal may obtain the first indication specified by a protocol.

In some embodiments, the terminal may obtain the first indication from one or more upper layers.

In some embodiments, the terminal may perform processing to obtain the first indication.

In some embodiments, the step S3205 may be omitted, and the terminal may autonomously implement the function indicated by the first indication, or the function is set by default.

In step S3206, a first message is sent.

For an optional implementation of the step S3206, reference may be made to the optional implementation of the step S2211 in FIG. 2B, and other related parts in embodiments involved in FIG. 2B, which will not be repeated here.

In some embodiments, the terminal may send the first message to a first access network device or other entities, which is not limited in the disclosure.

In step S3207, a first cell and a third cell are accessed.

For an optional implementation of the step S3207, reference may be made to the optional implementation of the step S2214 in FIG. 2B, and other related parts in embodiments involved in FIG. 2B, which will not be repeated here.

The methods involved in embodiments of the present disclosure may include at least one of the steps S3201 to S3207 described above. For example, the step S3206 may be implemented as an independent embodiment, the steps S3205 and S3206 may be implemented as an independent embodiment, the steps S3206 and S3207 may be implemented as an independent embodiment, the steps S3201, S3202, S3203, S3205 and S3206 may be implemented as an independent embodiment, and the steps S3201 to S3206 may be implemented as an independent embodiment, which is not limited herein.

In some embodiments, the steps S3201 to S3207 may be executed in an exchanged order or simultaneously.

In some embodiments, the steps S3201 to S3207 are all optional steps.

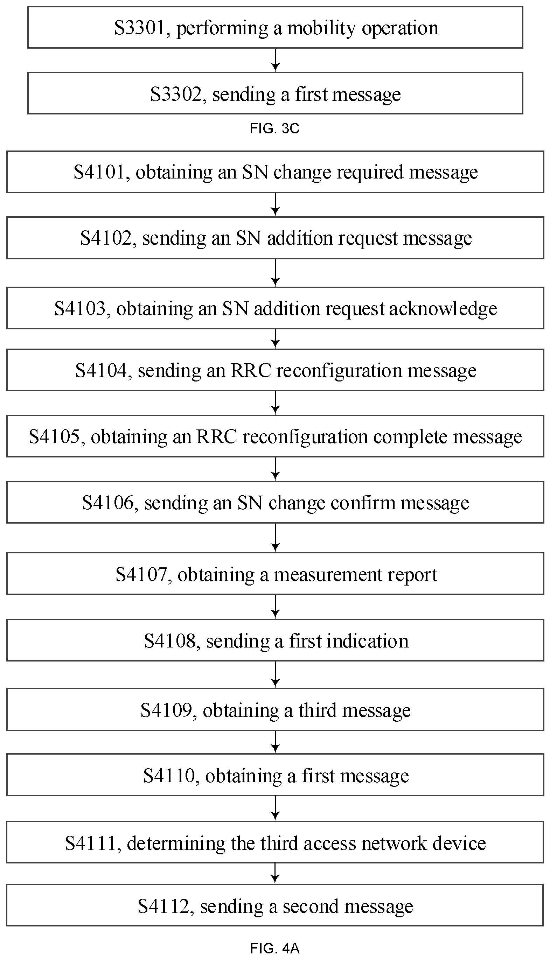

FIG. 3C is a flowchart illustrating a message transmission method according to an embodiment of the present disclosure. As illustrated in FFIG. 3C, embodiments of the present disclosure relate to the message transmission method, which may be performed by a terminal. The method may include the following steps.

In step S3301, a mobility operation is performed.

In some embodiments, the mobility operation may include an SCG mobility operation triggered by the terminal itself.

For example, an optional implementation of the step S3301 may include one or more of the steps S2102 to S2105 and S2107 to S2109 of FIG. 2A. For example, the step S3301 may include steps S2104 , S2105 and S2107; for another example, the step S3301 may include the steps S2104 and S2105; for another example, the step S3301 may include the steps S2104 and S2107, which is not limited herein.

In some embodiments, the mobility operation may include an SCG mobility operation triggered by a second access network device (SN).

For example, an optional implementation of the step S3301 may include one or more of steps S2101 to S2110 of FIG. 2A. For example, the step S3301 may include steps S2104, S2105, S2107, S2108 and S2109; for another example, the step S3301 may include steps S2104, S2105, S2108 and S2109; for another example, the step S3301 may include steps S2104, S2108 and S2109, which is not limited herein.

In some embodiments, the mobility operation may include the MCG mobility operation and the SCG mobility operation triggered by the terminal itself.

For example, an optional implementation of the step S3301 may include one or more of the steps S2201 to S2210 of FIG. 2B. For example, the step S3301 may include steps S2205 to S2207; for another example, the step S3301 may include steps S2205 and S2206; for yet another example, the step S3301 may include steps S2205 and S2207, which is not limited herein.

In some embodiments, the mobility operation may include the MCG mobility operation and the SCG mobility operation triggered by a fourth access network device (MN).

For example, an optional implementation of the step S3301 may include one or more of the steps S2201 to S2210 of FIG. 2B. For example, the step S3301 may include the steps S2205 to S2209; for another example, the step S3301 may include the steps S2205, S2206, S2208 and S2209; for another example, the step S3301 may include steps S2205, S2208 and S2209, which is not limited herein.

In step S3302, a first message is sent.

For an optional implementation of the step S3302, reference may be made to the optional implementations of the step S2111 in FIG. 2A, the step S2211 in FIG. 2B, the step S3106 in FIG. 3A and the step S3206 in FIG. 3B, and other related parts in embodiments involved in FIGs. 2A, 2B, 3A, and 3B, which will not be repeated here.

In some embodiments, the steps are all optional steps.

In some embodiments, the embodiments illustrated inFIG. 3C may also be combined with any one or more steps in the embodiments illustrated in FIG. 3A as a new embodiment.

In some embodiments, the embodiments illustrated inFIG. 3C may also be combined with any one or more steps in the embodiments illustrated in FIG. 3B as a new embodiment.

In some embodiments, the mobility operation includes the SCG mobility operation, which includes a PSCell change or a PSCell addition. The PSCell change includes changing a PSCell of the terminal from a second cell to a third cell, and the PSCell addition includes adding the third cell as the PSCell of the terminal. The second cell belongs to a second access network device, the third cell belongs to a third access network device, and the second access network device is different from the third access network device.

In some embodiments, the first access network device is the access network device to which the first cell belongs, the first cell is a PCell of the terminal, the first message includes a second message, and the second message is a configuration message corresponding to the third cell.

In some embodiments, the first message is configured to instruct the first access network device to determine the third access network device.

In some embodiments, the first message includes at least one of:
an LTM configuration identifier, configured to instruct the terminal to perform an LTM configuration corresponding to the SCG mobility operation;
target cell information, including frequency information and/or cell identifier corresponding to the third cell; or
a mobility configuration identifier for indicating mobility configuration information corresponding to the SCG mobility operation performed by the terminal.

In some embodiments, the mobility configuration identifier includes the LTM configuration identifier, and the LTM configuration identifier indicates the LTM configuration information corresponding to the SCG mobility operation performed by the terminal.

In some embodiments, the SCG mobility operation is triggered by the terminal or the second access network device.

In some embodiments, the method further includes:
receiving a first indication sent by the second access network device, in which the first indication is configured to instruct the terminal to perform the mobility operation.

In some embodiments, the mobility operation further includes an MCG mobility operation, the MCG mobility operation includes changing the PCell of the terminal from a fourth cell to the first cell, the fourth cell belongs to a fourth access network device, and the fourth access network device is different from the first access network device.

In some embodiments, the mobility operation is triggered by the terminal or the fourth access network device.

In some embodiments, the mobility operation is a cell change or addition triggered based on the LTM.

In some embodiments, the first message is a first RRC reconfiguration complete message, the second message is a second RRC reconfiguration complete message, and the first RRC reconfiguration complete message includes the second RRC reconfiguration complete message.

FIG. 4A is a flowchart illustrating a message transmission method according to an embodiment of the present disclosure. As illustrated in FIG. 4A, embodiments of the present disclosure relate to the message transmission method, which may be performed by a first access network device. The method includes the following steps.

In step S4101, an SN change required message is obtained.

For an optional implementation of the step S4101, reference may be made to the optional implementation of the step S2101 in FIG. 2A and other related parts in embodiments involved in FIG. 2A, which will not be repeated here.

In some embodiments, the first access network device may receive the SN change required message sent by a second access network device or other entities, which is not limited in the disclosure.

In some embodiments, the first access network device may perform processing to obtain the SN change required message.

In some embodiments, the step S4101 may be omitted, and the first access network device may autonomously implement the function indicated by the SN change required message, or the function is set by default.

In step S4102, an SN addition request message is sent.

For an optional implementation of the step S4102, reference may be made to the optional implementation of the step S2102 in FIG. 2A and other related parts in embodiments involved in FIG. 2A, which will not be repeated here.

In some embodiments, the first access network device may send the SN addition request message to a third access network device and/or a fifth access network device or other entities, which is not limited in the disclosure.

In step S4103, an SN addition request acknowledge is obtained.

For an optional implementation of the step S4103, reference may be made to the optional implementation of the step S2103 in FIG. 2A and other related parts in embodiments involved in FIG. 2A, which will not be repeated here.

In some embodiments, the first access network device may receive the SN addition request acknowledge sent by the third access network device and/or the fifth access network device or other entities, which is not limited in the disclosure.

In some embodiments, the first access network device may perform processing to obtain the SN addition request acknowledge.

In step S4104, an RRC reconfiguration message is sent.

For an optional implementation of the step S4104, reference may be made to the optional implementation of the step S2104 in FIG. 2A and other related parts in embodiments involved in FIG. 2A, which will not be repeated here.

In some embodiments, the first access network device may send the RRC reconfiguration message to a terminal or other entities, which is not limited in the disclosure.

In step S4105, an RRC reconfiguration complete message is obtained.

For an optional implementation of the step S4105, reference may be made to the optional implementation of the step S2105 in FIG. 2A and other related parts in embodiments involved in FIG. 2A, which will not be repeated here.

In some embodiments, the first access network device may receive the RRC reconfiguration complete message sent by the terminal or other entities, which is not limited in the disclosure.

In some embodiments, the first access network device may perform processing to obtain the RRC reconfiguration complete message.

In step S4106, an SN change confirm message is sent.

For an optional implementation of the step S4106, reference may be made to the optional implementation of the step S2106 in FIG. 2A and other related parts in embodiments involved in FIG. 2A, which will not be repeated here.

In some embodiments, the first access network device may send the SN change confirm message to the second access network device or other entities, which is not limited in the disclosure.

In step S4107, a measurement report is obtained.

For an optional implementation of the step S4107, reference may be made to the optional implementation of the step S2108 in FIG. 2A, and other related parts in embodiments involved in FIG. 2A, which will not be repeated here.

In some embodiments, the first access network device may receive the measurement report sent by the terminal or other entities, which is not limited in the disclosure.

In some embodiments, the first access network device may perform processing to obtain the measurement report.

In step S4108, a first indication is sent.

For an optional implementation of the step S4108, reference may be made to the optional implementation of the step S2109 in FIG. 2A, and other related parts in embodiments involved in FIG. 2A, which will not be repeated here.

In some embodiments, the first access network device may send the first indication to the terminal or other entities, which is not limited in the disclosure.

In step S4109, a third message is obtained.

For an optional implementation of the step S4109, reference may be made to the optional implementation of the step S2110 in FIG. 2A, and other related parts in embodiments involved in FIG. 2A, which will not be repeated here.

In some embodiments, the first access network device may receive the third message sent by the second access network device or other entities, which is not limited in the disclosure.

In some embodiments, the first access network device may perform processing to obtain the third message.

In step S4110, a first message is obtained.

For an optional implementation of the step S4110, reference may be made to the optional implementation of the step S2111 in FIG. 2A, and other related parts in embodiments involved in FIG. 2A, which will not be repeated here.

In some embodiments, the first access network device may receive the first message sent by the terminal or other entities, which is not limited in the disclosure.

In some embodiments, the first access network device may perform processing to obtain the first message.

In step S4111, the third access network device is determined.

For an optional implementation of the step S4111, reference may be made to the optional implementation of step the S2112 in FIG. 2A, and other related parts in embodiments involved in FIG. 2A, which will not be repeated here.

In step S4112, a second message is sent.

For an optional implementation of the step S4112, reference may be made to the optional implementation of the step S2113 in FIG. 2A, and other related parts in embodiments involved in FIG. 2A, which will not be repeated here.

In some embodiments, the first access network device may send the second message to the third access network device or other entities, which is not limited in the disclosure.

The methods involved in embodiments of the present disclosure may include at least one of steps S4101 to S4112 described above. For example, the step S4111 may be implemented as an independent embodiment, the steps S4111 and S4112 may be implemented as an independent embodiment, the steps S4110 and S4111 may be implemented as an independent embodiment, the steps S4109 and S4111 may be implemented as an independent embodiment, the steps S4109 to S4111 may be implemented as an independent embodiment, the steps S4109 to S4112 may be implemented as an independent embodiment, the steps S4102 to S4112 may be implemented as an independent embodiment, the steps S4102 to S4105 and the steps S4109 to S4112 may be implemented as an independent embodiment, and the steps S4101 to S4106 and the steps S4109 to S4112 may be implemented as an independent embodiment, which is not limited herein.

In some embodiments, the steps S4101 to S4112 may be executed in an exchanged order or simultaneously.

In some embodiments, the steps S4101 to S4112 are all optional steps.

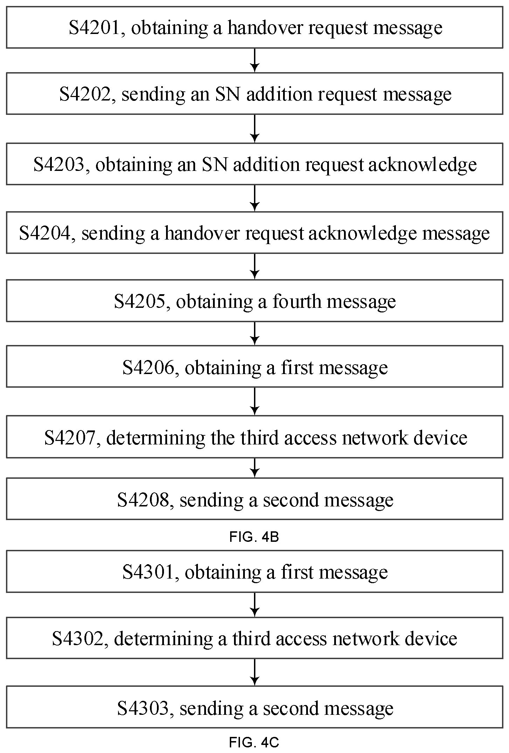

FIG. 4B is a flowchart illustrating a message transmission method according to an embodiment of the present disclosure. As illustrated in FIG. 4B, embodiments of the present disclosure relate to the message transmission method, which may be performed by a first access network device. The method includes the following steps.

In step S4201, a handover request message is obtained.

For an optional implementation of the step S4201, reference may be made to the optional implementation of the step S2201 in FIG. 2B, and other related parts in embodiments involved in FIG. 2B, which will not be repeated here.

In some embodiments, the first access network device may receive the handover request message sent by a fourth access network device or other entities, which is not limited in the disclosure.

In some embodiments, the first access network device may perform processing to obtain the handover request message.

In some embodiments, the step S4201 may be omitted, and the first access network device may autonomously implement the function indicated by the handover request message, or the function is set by default.

In step S4202, an SN addition request message is sent.

For an optional implementation of the step S4202, reference may be made to the optional implementation of the step S2202 in FIG. 2B and other related parts in embodiments involved in FIG. 2B, which will not be repeated here.

In some embodiments, the first access network device may send the SN addition request message to a third access network device and/or a fifth access network device or other entities, which is not limited in the disclosure.

In step S4203, an SN addition request acknowledge is obtained.

For an optional implementation of the step S4203, reference may be made to the optional implementation of the step S2203 in FIG. 2B, and other related parts in embodiments involved in FIG. 2B, which will not be repeated here.

In some embodiments, the first access network device may receive the SN addition request acknowledge sent by the third access network device and/or the fifth access network device or other entities, which is not limited in the disclosure.

In some embodiments, the first access network device may perform processing to obtain the SN addition request acknowledge.

In step S4204, a handover request acknowledge message is sent.

For an optional implementation of the step S4204, reference may be made to the optional implementation of the step S2204 in FIG. 2B, and other related parts in embodiments involved in FIG. 2B, which will not be repeated here.

In some embodiments, the first access network device may send the handover request acknowledge message to the fourth access network device or other entities, which is not limited in the disclosure.

In step S4205, a fourth message is obtained.

For an optional implementation of the step S4205, reference may be made to the optional implementation of the step S2210 in FIG. 2B, and other related parts in embodiments involved in FIG. 2B, which will not be repeated here.

In some embodiments, the first access network device may receive the fourth message sent by the second access network device or other entities, which is not limited in the disclosure.

In some embodiments, the first access network device may perform processing to obtain the fourth message.

In step S4206, a first message is obtained.

For an optional implementation of the step S4206, reference may be made to the optional implementation of the step S2211 in FIG. 2B, and other related parts in embodiments involved in FIG. 2B, which will not be repeated here.

In some embodiments, the first access network device may receive the first message sent by the terminal or other entities, which is not limited in the disclosure.

In some embodiments, the first access network device may perform processing to obtain the first message.

In step S4207, the third access network device is determined.

For an optional implementation of the step S4207, reference may be made to the optional implementation of the step S2212 in FIG. 2B, and other related parts in embodiments involved in FIG. 2B, which will not be repeated here.

In step S4208, a second message is sent.

For an optional implementation of the step S4208, reference may be made to the optional implementation of the step S2213 in FIG. 2B, and other related parts in embodiments involved in FIG. 2B, which will not be repeated here.

In some embodiments, the first access network device may send the second message to the third access network device or other entities, which is not limited in the disclosure.

The methods involved in embodiments of the present disclosure may include at least one of steps S4201 to S4208 described above. For example, the step S4207 may be implemented as an independent embodiment, the steps S4207 and S4208 may be implemented as an independent embodiment, the steps S4206 and S4207 may be implemented as an independent embodiment, the steps S4205 and S4207 may be implemented as an independent embodiment, the steps S4205 to S4207 may be implemented as an independent embodiment, the steps S4205 to S4208 may be implemented as an independent embodiment, the steps S4201 to S4204 may be implemented as an independent embodiment, and the steps S4201 to S4204 and S4207 may be implemented as an independent embodiment, which is not limited herein.

In some embodiments, the steps S4201 to S4208 may be executed in an exchanged order or simultaneously.

In some embodiments, the steps S4201 to S4208 are all optional steps.

FIG. 4C is a flowchart illustrating a message transmission method according to an embodiment of the present disclosure. As illustrated in FIG. 4C, embodiments of the present disclosure relate to the message transmission method, which may be performed by a first access network device. The method may include the following steps.

In step S4301, a first message is obtained.

For an optional implementation of the step S4301, reference may be made to the optional implementations of the step S2111 in FIG. 2A, the step S2211 in FIG. 2B, the step S4110 in FIG. 4A, and the step S4206 in FIG. 4B, and other related parts in embodiments involved in FIGs. 2A, 2B, 4A, and 4B, which will not be repeated here.

In step S4302, a third access network device is determined.

For an optional implementation of the step S4302, reference may be made to the optional implementations of the step S2112 in FIG. 2A, the step S2212 in FIG. 2B, the step S4111 in FIG. 4A, the step S4206 in FIG. 4B, and other related parts in embodiments involved in FIGs. 2A, 2B, 4A, and 4B, which will not be repeated here.

In step S4303, a second message is sent.

For an optional implementation of the step S4303, reference may be made to the optional implementations of the step S2113 in FIG. 2A, the step S2213 in FIG. 2B, the step S4112 in FIG. 4A, the step S4206 in FIG. 4B, and other related parts in embodiments involved in FIGs. 2A, 2B, 4A, and 4B, which will not be repeated here.

In some embodiments, the steps are all optional steps.

In some embodiments, the embodiments illustrated in FIG. 4C may also be combined with any one or more steps in the embodiments illustrated in FIG. 4A as a new embodiment.

In some embodiments, the embodiments illustrated in FIG. 4C may also be combined with any one or more steps in the embodiments illustrated in FIG. 4B as a new embodiment.

In some embodiments, the first message is a message sent by the terminal when performing a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the first message includes a second message, and the second message is a message corresponding to the third cell.

In some embodiments, the third access network device is an access network device to which the third cell belongs, and the third access network device is different from a second access network device to which the second cell belongs.

In some embodiments, determining the third access network device includes at least one of:
determining the third access network device according to the first message; or
determining the third access network device according to a third message, in which the third message is a message sent by the second access network device to the first access network device.

In some embodiments, the first message further includes at least one of:
target cell information, including frequency information and/or cell identifier corresponding to the third cell; or
a mobility configuration identifier for indicating mobility configuration information corresponding to the SCG mobility operation performed by the terminal.

In some embodiments, the mobility configuration identifier includes an LTM configuration identifier, and the LTM configuration identifier indicates LTM configuration information corresponding to the SCG mobility operation performed by the terminal.

In some embodiments, the first message includes a first parameter and a second parameter, the first parameter indicates whether the second parameter is configured to determine the third access network device, and the second parameter is a selected PSCell for SCG LTM.

In some embodiments, the third message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In some embodiments, the mobility configuration identifier includes an LTM configuration identifier, and the LTM configuration identifier indicates LTM configuration information corresponding to the SCG mobility operation performed by the terminal.

In some embodiments, the SCG mobility operation is triggered by the terminal or the second access network device.

In some embodiments, the mobility operation further includes an MCG mobility operation, the MCG mobility operation includes changing the PCell of the terminal from a fourth cell to the first cell, the fourth cell belongs to a fourth access network device, and the fourth access network device is different from the first access network device.

In some embodiments, determining the third access network device includes at least one of:
determining the third access network device according to the first message; or
determining the third access network device according to a fourth message, in which the fourth message is a message sent by the fourth access network device to the first access network device.

In some embodiments, the fourth message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In some embodiments, the mobility configuration identifier includes an LTM configuration identifier, and the LTM configuration identifier indicates LTM configuration information corresponding to the SCG mobility operation performed by the terminal.

In some embodiments, the mobility operation is triggered by the terminal or the fourth access network device.

In some embodiments, the mobility operation is a cell change or addition triggered based on LTM.

In some embodiments, the first message is a first RRC reconfiguration complete message, the second message is a second RRC reconfiguration complete message, and the first RRC reconfiguration complete message includes the second RRC reconfiguration complete message.

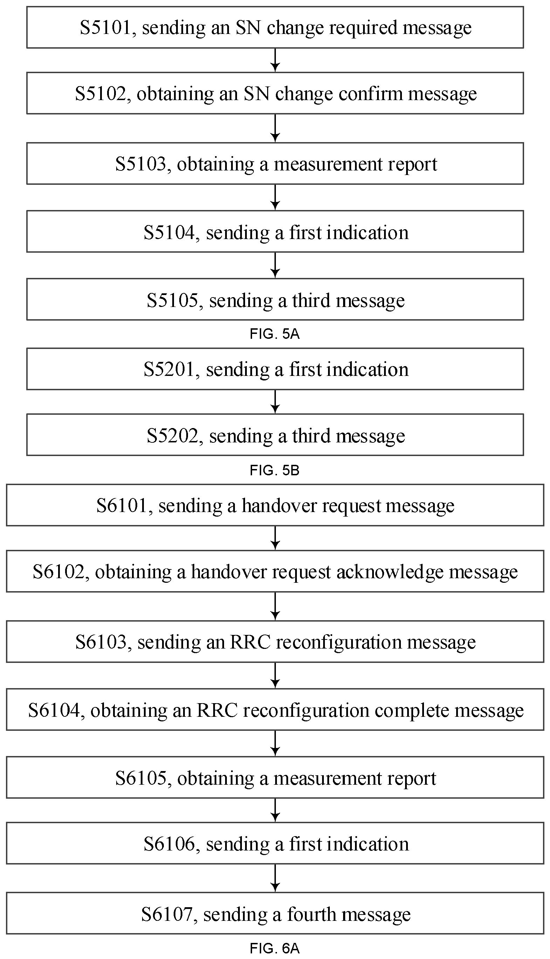

FIG. 5A is a flowchart illustrating a message transmission method according to an embodiment of the present disclosure. As illustrated in FIG. 5A, embodiments of the present disclosure relate to the message transmission method, which may be performed by a second access network device. The method includes the following steps.

In step S5101, an SN change required message is sent.

For an optional implementation of the step S5101, reference may be made to the optional implementation of the step S2101 in FIG. 2A, and other related parts in embodiments involved in FIG. 2A, which will not be repeated here.

In some embodiments, the second access network device may send the SN change required message to a first access network device or other entities, which is not limited in the disclosure.

In step S5102, an SN change confirm message is obtained.

For an optional implementation of the step S5102, reference may be made to the optional implementation of the step S2106 in FIG. 2A, and other related parts in embodiments involved in FIG. 2A, which will not be repeated here.

In some embodiments, the second access network device may receive the SN change confirm message sent by the first access network device or other entities, which is not limited in the disclosure.

In some embodiments, the second access network device may perform processing to obtain the SN change confirm message.

In step S5103, a measurement report is obtained.

For an optional implementation of the step S5103, reference may be made to the optional implementation of the step S2108 in FIG. 2A, and other related parts in embodiments involved in FIG. 2A, which will not be repeated here.

In some embodiments, the second access network device may receive the measurement report sent by a terminal or other entities, which is not limited in the disclosure.

In some embodiments, the second access network device may perform processing to obtain the measurement report.

In step S5104, a first indication is sent.

For an optional implementation of the step S5104, reference may be made to the optional implementation of the step S2109 in FIG. 2A, and other related parts in embodiments involved in FIG. 2A, which will not be repeated here.

In some embodiments, the second access network device may send the first indication to the terminal or other entities, which is not limited in the disclosure.

In step S5105, a third message is sent.

For an optional implementation of the step S5105, reference may be made to the optional implementation of the step S2110 in FIG. 2A, and other related parts in embodiments involved in FIG. 2A, which will not be repeated here.

In some embodiments, the second access network device may send the third message to the first access network device or other entities, which is not limited in the disclosure.

The methods involved in embodiments of the present disclosure may include at least one of steps S5101 to S5105 described above. For example, the step S5105 may be implemented as an independent embodiment, the steps S5104 and S5105 may be implemented as an independent embodiment, the steps S5103 to S5105 may be implemented as an independent embodiment, and the steps S5101 and S5102 may be implemented as an independent embodiment, which is not limited herein.

In some embodiments, the steps S5101 to S5105 may be executed in an exchanged order or simultaneously.

In some embodiments, the steps S5101 to S5105 are all optional steps.

FIG. 5B is a flowchart illustrating a message transmission method according to an embodiment of the present disclosure. As illustrated in FIG. 5B, embodiments of the present disclosure relate to the message transmission method, which may be performed by a second access network device. The method may include the following steps.

In step S5201, a first indication is sent.

For an optional implementation of the step S5201, reference may be made to the optional implementations of the step S2109 in FIG. 2A, and step S5104 in FIG. 5A, and other related parts in embodiments involved in FIGs. 2A and 5A, which will not be repeated here.

In step S5202, a third message is sent.

For an optional implementation of the step S5202, reference may be made to the optional implementations of the step S2110 in FIG. 2A, and step S5105 in FIG. 5A, and other related parts in embodiments involved in FIGs. 2A and 5A, which will not be repeated here.

In some embodiments, the steps are all optional steps.

In some embodiments, the embodiments illustrated in FIG. 5B may also be combined with any one or more steps in the embodiments illustrated in FIG. 5A as a new embodiment.

In some embodiments, the first indication is configured to instruct the terminal to perform a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to the second access network device, the third cell belongs to a third access network device, and the second access network device is different from the third access network device.

In some embodiments, the third message is configured to instruct the first access network device to determine the third access network device.

In some embodiments, the third message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In some embodiments, the mobility configuration identifier includes an LTM configuration identifier, and the LTM configuration identifier indicates LTM configuration information corresponding to the SCG mobility operation performed by the terminal.

In some embodiments, the SCG mobility operation is triggered by the terminal or the second access network device.

In some embodiments, the mobility operation is a cell change or addition triggered based on LTM.

FIG. 6A is a flowchart illustrating a message transmission method according to an embodiment of the present disclosure. As illustrated in FIG. 6A, embodiments of the present disclosure relate to the message transmission method, which may be performed by a fourth access network device. The method includes the following steps.

In step S6101, a handover request message is sent.

For an optional implementation of the step S6101, reference may be made to the optional implementation of the step S2201 in FIG. 2B, and other related parts in embodiments involved in FIG. 2B, which will not be repeated here.

In some embodiments, the fourth access network device may send the handover request message to a first access network device or other entities, which is not limited in the disclosure.

In step S6102, a handover request acknowledge message is obtained.

For an optional implementation of the step S6102, reference may be made to the optional implementation of the step S2204 in FIG. 2B, and other related parts in embodiments involved in FIG. 2B, which will not be repeated here.

In some embodiments, the fourth access network device may receive the handover request acknowledge message sent by the first access network device or other entities, which is not limited in the disclosure.

In some embodiments, the fourth access network device may perform processing to obtain the handover request acknowledge message.

In step S6103, an RRC reconfiguration message is sent.

For an optional implementation of the step S6103, reference may be made to the optional implementation of the step S2205 in FIG. 2B, and other related parts in embodiments involved in FIG. 2B, which will not be repeated here.

In some embodiments, the fourth access network device may send the RRC reconfiguration message to a terminal or other entities, which is not limited in the disclosure.

In step S6104, an RRC reconfiguration complete message is obtained.

For an optional implementation of the step S6104, reference may be made to the optional implementation of the step S2206 in FIG. 2B, and other related parts in embodiments involved in FIG. 2B, which will not be repeated here.

In some embodiments, the fourth access network device may receive the RRC reconfiguration complete message sent by the terminal or other entities, which is not limited in the disclosure.

In some embodiments, the fourth access network device may perform processing to obtain the RRC reconfiguration complete message.

In step S6105, a measurement report is obtained.

For an optional implementation of the step S6105, reference may be made to the optional implementation of the step S2208 in FIG. 2B, and other related parts in embodiments involved in FIG. 2B, which will not be repeated here.

In some embodiments, the fourth access network device may receive the measurement report sent by the terminal or other entities, which is not limited in the disclosure.

In some embodiments, the fourth access network device may perform processing to obtain the measurement report.

In step S6106, a first indication is sent.

For an optional implementation of the step S6106, reference may be made to the optional implementation of the step S2209 in FIG. 2B, and other related parts in embodiments involved in FIG. 2B, which will not be repeated here.

In some embodiments, the fourth access network device may send the first indication to the terminal or other entities, which is not limited in the disclosure.

In step S6107, a fourth message is sent.

For an optional implementation of the step S6107, reference may be made to the optional implementation of the step S2210 in FIG. 2B, and other related parts in embodiments involved in FIG. 2B, which will not be repeated here.

In some embodiments, the fourth access network device may send the fourth message to the first access network device or other entities, which is not limited in the disclosure.

The methods involved in embodiments of the present disclosure may include at least one of steps S6101 to S6107 described above. For example, the step S6107 may be implemented as an independent embodiment, the steps S6106 + S6107 may be implemented as an independent embodiment, the steps S6101 and S6102 may be implemented as an independent embodiment, the steps S6101 to S6104 may be implemented as an independent embodiment, and the steps S6101 to S6104 and the steps S6106 to S6107 may be implemented as an independent embodiment, which is not limited herein.

In some embodiments, the steps S6101 to S6107 may be executed in an exchanged order or simultaneously.

In some embodiments, the steps S6101 to S6107 are all optional steps.

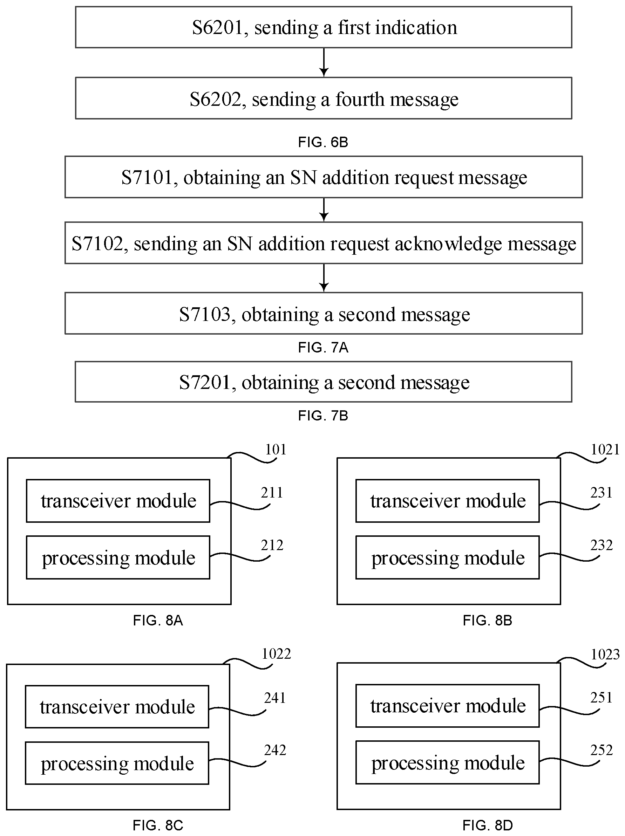

FIG. 6B is a flowchart illustrating a message transmission method according to an embodiment of the present disclosure. As illustrated in FIG. 6B, embodiments of the present disclosure relate to the message transmission method, which may be performed by a fourth access network device. The method may include the following steps.

In step S6201, a first indication is sent.

For an optional implementation of the step S6201, reference may be made to the optional implementations of the step S2209 in FIG. 2B, and the step S6106 in FIG. 6A, and other related parts in embodiments involved in FIGs. 2A and 6A, which will not be repeated here.

In step S6202, a fourth message is sent.

For an optional implementation of the step S6202, reference may be made to the optional implementations of the step S2210 in FIG. 2B, and the step S6107 in FIG. 6A, and other related parts in embodiments involved in FIGs. 2A and 6A, which will not be repeated here.

In some embodiments, the steps are all optional steps.

In some embodiments, the embodiments illustrated in FIG. 6B may also be combined with any one or more steps in the embodiments illustrated in FIG. 6A as a new embodiment.

In some embodiments, the first indication is configured to instruct the terminal to perform a mobility operation, the mobility operation includes an MCG mobility operation and an SCG mobility operation. The SCG mobility operation includes a PSCell change or a PSCell addition. The PSCell change includes changing a PSCell of the terminal from a second cell to a third cell. The PSCell addition includes adding the third cell as the PSCell of the terminal. The second cell belongs to a second access network device, the third cell belongs to a third access network device, and the second access network device is different from the third access network device. The MCG mobility operation includes changing a PCell of the terminal from a fourth cell to a first cell. The first cell belongs to a first access network device, the fourth cell belongs to the fourth access network device, and the fourth access network device is different from the first access network device.

In some embodiments, the fourth message is configured to instruct the first access network device to determine the third access network device.

In some embodiments, the fourth message includes at least one of:
an access network device identifier for indicating the third access network device;
a target cell identifier for indicating the third cell;
target cell information, including frequency information and/or cell identifier corresponding to the third cell;
a mobility configuration identifier for indicating mobility configuration information corresponding to the SCG mobility operation performed by the terminal; or
TCI state information for indicating beam information of the third cell.

In some embodiments, the mobility configuration identifier includes an LTM configuration identifier, and the LTM configuration identifier indicates LTM configuration information corresponding to the SCG mobility operation performed by the terminal.

In some embodiments, the mobility operation is triggered by the terminal or the fourth access network device.

In some embodiments, the mobility operation is a cell change or addition triggered based on LTM.

FIG. 7A is a flowchart illustrating a message transmission method according to an embodiment of the present disclosure. As illustrated in FIG. 7A, embodiments of the present disclosure relate to the message transmission method, which may be performed by a third access network device. The method includes the following steps.

In step S7101, an SN addition request message is obtained.

For an optional implementation of the step S7101, reference may be made to the optional implementations of the step S2102 in FIG. 2A, and the step S2202 in FIG. 2B, and other related parts in embodiments involved in FIGs. 2A and 2B, which will not be repeated here.

In some embodiments, the third access network device may receive the SN addition request message sent by a first access network device or other entities, which is not limited in the disclosure.

In step S7102, an SN addition request acknowledge message is sent.

For an optional implementation of the step S7102, reference may be made to the optional implementations of the step S2103 in FIG. 2A, and step S2203 in FIG. 2B, and other related parts in embodiments involved in FIGs. 2A and 2B, which will not be repeated here.

In some embodiments, the third access network device may send the SN addition request acknowledge message to the first access network device or other entities, which is not limited in the disclosure.

In step S7103, a second message is obtained.

For an optional implementation of the step S7103, reference may be made to the optional implementations of the step S2113 in FIG. 2A, and the step S2213 in FIG. 2B, and other related parts in embodiments involved in FIGs. 2A and 2B, which will not be repeated here.

In some embodiments, the third access network device may receive the second message sent by the first access network device or other entities, which is not limited in the disclosure.

The methods involved in embodiments of the present disclosure may include at least one of steps S7101 to S7103 described above. For example, the step S7103 may be implemented as an independent embodiment, and the steps S7101 and S7102 may be implemented as an independent embodiment, which is not limited herein.

In some embodiments, the steps S7101 to S7103 may be executed in an exchanged order or simultaneously.

In some embodiments, the steps S7101 to S7103 are all optional steps.

FIG. 7B is a flowchart illustrating a message transmission method according to an embodiment of the present disclosure. As illustrated in FIG. 7B, embodiments of the present disclosure relate to the message transmission method, which may be performed by a third access network device. The method may include the following steps.

In step S7201, a second message is obtained.

For an optional implementation of the step S7201, reference may be made to the optional implementations of the step S2113 in FIG. 2A, the step S2213 in FIG. 2B, and the step S7103 in FIG. 7A, and other related parts in embodiments involved in FIGs. 2A, 2B, and 7A, which will not be repeated here.

In some embodiments, the embodiments illustrated in FIG. 7B may also be combined with any one or more steps in the embodiments illustrated in FIG. 7A as a new embodiment.

In some embodiments of the present disclosure, a method is provided for an LTM candidate configuration (or candidate cell) indicating access of a terminal (UE), which may be indicated by the UE in an RRC reconfiguration complete message sent to an MN, or by sending corresponding indication information by a source SN (S-SN) that sends a cell switch command, to the MN.

In some embodiments, the RRC reconfiguration complete message sent by the UE to the MN includes information for the LTM candidate configuration or LTM target cell that indicates UE access. For example, the RRC reconfiguration complete message sent by the UE to the MN includes an identifier corresponding to the LTM candidate configuration performed by the UE. For another example, the RRC reconfiguration complete message sent by the UE to the MN includes relevant information of the LTM target cell accessed by the UE, such as an LTM target cell identifier and a corresponding frequency.

In some embodiments, after the source SN (S-SN) sends the cell switch command to the UE, it may send an Xn message to notify the MN. The Xn message may include the LTM candidate configuration, the LTM target cell, or the LTM target SN corresponding to the S-SN initiated LTM.

In some embodiments, for an LTM for MCG and SCG change, after a source MN (S-MN) sends the cell switch command to the UE, it sends the Xn message to notify a target MN (T-MN). The message may include a target PSCell identifier or the LTM target SN in the LTM candidate configuration corresponding to the S-MN initiated LTM.

In some embodiments, the MN and/or T-MN may determine the LTM target PSCell and a corresponding target SN assessed by the UE based on at least one of the foregoing messages (e.g., the RRC reconfiguration complete message sent by the UE to the MN, the Xn message sent by the S-SN, and the Xn message sent by the S-MN), which may thus forward an SN RRC reconfiguration complete message to a corresponding target SN.

In some embodiments of the present disclosure, for an inter-SN SCG LTM scenario, the UE initiates an SCG LTM upon receiving the cell switch command sent by the S-SN, or the UE initiates an SCG LTM based on a pre-configured execution condition. The UE sends a first RRC reconfiguration complete message to the MN, in which the first RRC reconfiguration complete message includes a second RRC reconfiguration complete message that needs to be forwarded to the C-SN accessed by the UE. Since the SCG LTM is not initiated by the MN, the MN cannot know which C-SN is accessed by the UE. The problem existing in this scenario may be solved by the following Examples 1 and 2. Optionally, Example 1 is only suitable for the S-SN initiated SCG LTM, rather than for the SCG LTM actively initiated by the UE.

### Example 1:

The RRC reconfiguration complete message sent by the UE to the MN includes the information for the LTM candidate configuration or LTM target cell that indicates the UE access.

Optionally, with reference to FIG. 2A, the UE initiates the SCG LTM upon receiving the cell switch command (e.g., the first indication in FIG. 2A) sent by the S-SN, or the UE initiates the SCG LTM in a case that the pre-configured execution condition is fulfilled. The UE accesses the target PSCell corresponding to the LTM candidate configuration identifier indicated in the cell switch command or the target PSCell corresponding to the execution condition fulfilled.

Optionally, with reference to the step S2111 in FIG. 2A, the UE sends the first RRC reconfiguration complete message (e.g., the first message in FIG. 2A) to the MN (e.g., the first access network device in FIG. 2A), which includes a second RRC reconfiguration complete message (e.g., the second message). The second RRC reconfiguration complete message corresponds to the accessed target PSCell and needs to be forwarded to the SN.

In an implementation, the first RRC reconfiguration complete message may include the LTM candidate configuration identifier corresponding to the SCG LTM performed by the UE. Based on the LTM candidate configuration identifier, the MN determines the target PSCell corresponding to the SCG LTM performed by the UE, and thus determines the target SN to which the UE accesses, and forwards the second RRC reconfiguration complete message (that is included in the first RRC reconfiguration complete message and needs to be sent to the SN) to the target SN. The execution of SCG LTM by the UE may include one or more of an inter-SN SCG LTM, or an intra-SN SCG LTM in MN format, i.e., the SCG LTM configured by the MN.

For example, the first RRC reconfiguration complete message may include at least one of:

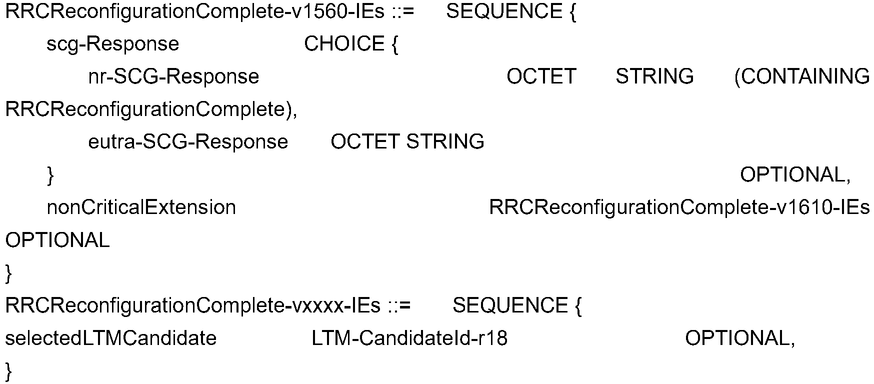

The selectedLTMCandidate field may be used to indicate the ID of the selected LTM candidate configuration the UE applied upon the execution of SCG LTM.

In an implementation, the first RRC reconfiguration complete message may include the relevant information of the LTM target cell corresponding to the SCG LTM performed by the UE, such as the LTM target cell identifier (e.g., a PCI or a CGI) and corresponding frequency information (ARFCN). Based on the relevant information of the LTM target cell received, the MN may determine the target PSCell (e.g., the third cell) corresponding to the SCG LTM performed by the UE, thus determining the target SN (e.g., the third access network device) to which the UE accesses, and send the second RRC reconfiguration complete message (that is included in the first RRC reconfiguration complete message and is to be sent to the SN) to the target SN.

Optional 1: a new parameter is added to the first RRC reconfiguration complete message to indicate the relevant information of the LTM target cell.

For example, the first RRC reconfiguration complete message may include at least one of:

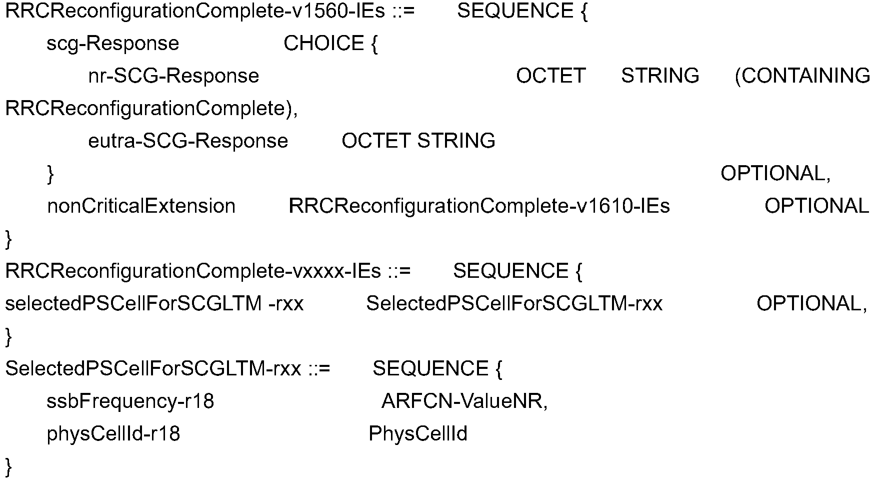

The selectedPSCellForSCGLTM field may be used to indicate information of the target PSCell at execution of the SCG LTM.

Optionally, the selectedPSCellForSCGLTM may include at least one of ssbFrequency-r18 or physCellId-r18, in which the ssbFrequency-r18 field may be used to indicate frequency information of the target cell, and the physCellId-r18 field may be used to indicate a PCI of the target cell. Optionally, the selectedPSCellForSCGLTM field, ssbFrequency-r18 field, and physCellId-r18 field are optional fields.

Optional 2: it may be indicated in the first RRC reconfiguration complete message that the relevant information for transmitting the target PSCell accessed by the UE in an existing parameter indicates the target PSCell corresponding to the SCG LTM.

For example, the first RRC reconfiguration complete message may include at least one of:

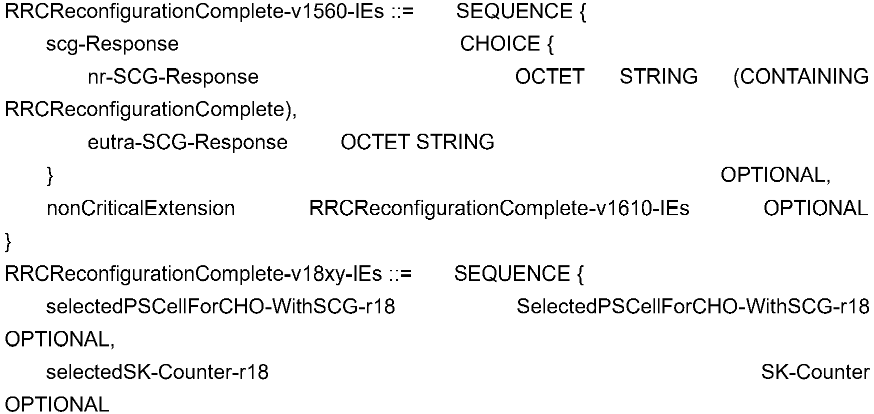

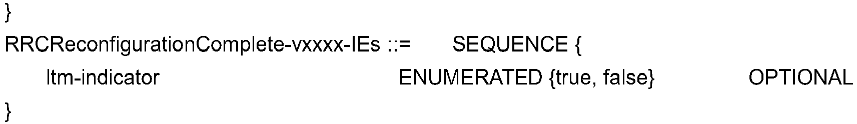

Optionally, the ltm-indicator field may be used to indicate the execution of LTM, or the ltm-indicator field may be used to indicate whether the selectedPSCellForCHO-WithSCG-r18 field includes target PSCell information corresponding to the SCG LTM. The selectedPSCellForCHO-WithSCG-r18 field may be used to indicate the selected target PSCell, and the target PSCell may be a target PSCell selected by a mobility operation (such as the SCG LTM).

Optionally, in a case that a value of the ltm-indicator field is "true", the selectedPSCellForCHO-WithSCG-r18 field includes the target PSCell information corresponding to the SCG LTM. Conversely, in a case that a value of the ltm-indicator field is not "true", or in a case that the first RRC reconfiguration complete message does not include the ltm-indicator field, the selectedPSCellForCHO-WithSCG-r18 field does not include the target PSCell information corresponding to the SCG LTM.

Optionally, the ltm-indicator field may be the first parameter described above, and the selectedPSCellForCHO-WithSCG-r18 field may be the second parameter described above.

### Example 2:

After the source SN (S-SN) sends the cell switch command to the UE, it sends an Xn message to inform the MN that the S-SN triggers the LTM candidate configuration, the LTM target cell, or the LTM target node corresponding to the LTM.

In some embodiments, the UE initiates the SCG LTM upon receiving the cell switch command sent by the S-SN, accesses a candidate PSCell corresponding to an LTM candidate configuration identifier indicated in the cell switch command, and sends a first RRC reconfiguration complete message carrying a second RRC reconfiguration complete message to be sent to the SN, to the MN.

Optionally, after the S-SN sends the cell switch command to the UE to initiate the SCG LTM, the S-SN may send a first notification message to the MN. The first notification message may be, for example, the third message illustrated in FIG. 2A or a cell switch notification message, or other existing XnAP messages sent by the SN to the MN, or a newly introduced XnAP message, which is not limited in the present disclosure.

Optionally, the S-SN may indicate relevant information of the S-SN initiated SCG LTM in the first notification message. Based on the relevant information in the first notification message received, the MN determines the target PSCell (e.g., the third cell) corresponding to the SCG LTM executed by the UE, thus determining the target SN (e.g., the third access network device) to which the UE accesses, and forwards the second RRC reconfiguration complete message (that is included and is to be sent to the SN) to the target SN.

The relevant information of the S-SN initiated SCG LTM may include, but is not limited to, one or more of:
a target SN identifier accessed by the UE;
a target cell identifier accessed by the UE;
an LTM configuration identifier corresponding to the SCG LTM executed by the UE;
frequency information and a PCI corresponding to the target cell accessed by the UE; and
relevant information of a TCI state ID included in the cell switch command.

For example, the first notification message (cell switch notification message) may include, but is not limited to, any one or more instances of information in Table 1 below:

**Table 1**

| IE | Presence | IE type and reference | Criticality | Assigned Criticality |
|---|---|---|---|---|
| Message Type | M (Mandatory) | | YES | reject |
| First node ID | M | Reference to NG-RAN node UE XnAP ID | YES | reject |
| Second node ID | M | Reference to NG-RAN node UE XnAP ID | - | |
| Access network device ID | M/O(Optional) | Reference to Global NG-RAN Node ID | YES | reject |
| Target cell ID | M/O | Reference to NR CGI | - | |
| LTM configuration ID | M/O | Integer (1-8) | - | |
| LTM cell switch information | M/O | | YES | ignore |
| ->TCI state ID | M/O | Integer (0-127) | - | |

As illustrated in Table 1, the first notification message (cell switch notification message) may include, but is not limited to, at least one of:
the message type for indicating a type of Xn message and defining a purpose and function of the message;
the first node identifier for indicating M-NG-RAN node UE XnAP ID, in which the first node identifier may be allocated by an M-NG-RAN node;
the second node identifier for indicating S-NG-RAN node UE XnAP ID, in which the second node identifier may be allocated by an S-NG-RAN node;
the access network device identifier for indicating a third access network device, in which the access network device identifier may also be referred to as a target node identifier or target S-NG-RAN node ID;
the target cell identifier for indicating a third cell, in which the target cell identifier may be referred to as a PSCell ID;
target cell information including frequency information and/or cell identifier corresponding to the third cell, in which the frequency information may include a frequency point and/or frequency band, and the cell identifier may include a PCI and/or a CGI;
the LTM configuration identifier for indicating LTM configuration information corresponding to an SCG mobility operation performed by a terminal, for example, in which the LTM configuration identifier may be an LTM candidate ID IE; or
the LTM cell switch information, in which the LTM cell switch information may include TCI state information, which may be used to indicate beam information of the third cell; for example, the TCI state information may be an TCI state ID (beam ID), and the LTM configuration identifier may be a candidate TCI state ID IE (i.e., CandidateTCI-StatesId IE).

Optionally, the "Criticality" in the table indicates whether to perform error handling in a case of an information error (such as a checksum error). YES indicates that the error handling needs to be performed. In a case that the "Assigned Criticality" is "reject", it means that processing of a message in that row is rejected after an error occurs in information in that row. In a case that the "Assigned Criticality" is "ignore", it means that information in that row may be ignored after an error occurs in such information in that row, but other information in the message may continue to be processed.

In some embodiments, each element, each row, or each column in Table 1 may be implemented as an independent embodiment, and a combination of any element, any row, or any column may also be implemented as an independent embodiment.

In some embodiments of the present disclosure, for an MCG and SCG LTM (LTM for MCG and SCG change) scenario, the UE receives the cell switch command sent by the S-MN to initiate the LTM and perform simultaneous changes to MCG and SCG, or the UE initiates the LTM for MCG and SCG change based on a pre-configured execution condition. The UE sends the first RRC reconfiguration complete message to the T-MN, in which the first RRC reconfiguration complete message includes the second RRC reconfiguration complete message that needs to be forwarded to the T-SN that the UE accesses. Since one T-MN may be configured with a plurality of C-SNs at the same time, the MN cannot know which C-SN is accessed by the UE. The problem existing in this scenario may be solved by Example 3 and Example 4. Optionally, Example 3 may be only suitable for the LTM for MCG and SCG change initiated by the S-MN, rather than the LTM for MCG and SCG change actively initiated by the UE.

### Example 3:

After the S-MN sends the cell switch command to the UE, it sends the Xn message to the T-MN, to inform the T-MN that the S-MN triggers the LTM candidate configuration, the LTM target cell, or the LTM target node corresponding to the LTM.

In some embodiments, the UE initiates an MCG&SCG LTM upon receiving the cell switch command sent by the S-MN, accesses a candidate PSCell corresponding to an LTM candidate configuration identifier indicated in the cell switch command, and sends a first RRC reconfiguration complete message carrying a second RRC reconfiguration complete message to be sent to the SN, to the T-MN.

Optionally, after the S-MN sends the cell switch command to the UE to initiate the MCG&SCG LTM, the S-MN may send a second notification message to the T-MN. The second notification message may be, for example, the fourth message illustrated in FIG. 2B or a cell switch notification message, or other existing XnAP messages sent by the SN to the MN, or a newly introduced XnAP message, which is not limited in the present disclosure.

Optionally, a specific implementation of this Example 3 is similar to that of Example 2 in the inter-SN SCG LTM scenario. The difference between the Example 3 and Example 2 is that the notification message in Example 2 is sent from the S-SN to the MN while the notification message in Example 3 is sent from the S-MN to the T-MN.

A content of the second notification message is similar to that of the first notification message. For example, the second notification message (cell switch notification message) may include, but is not limited to, any one or more instances of information in Table 2 below:

**Table 2**

| IE | Presence | IE type and reference | Criticality | Assigned Criticality |
|---|---|---|---|---|
| Message Type | M | | YES | reject |
| First node ID | M | Reference to NG-RAN node UE XnAP ID | YES | reject |
| Second node ID | M | Reference to NG-RAN node UE XnAP ID | - | |
| Access network device ID | M/O | Reference to Global NG-RAN Node ID | YES | reject |
| Target cell ID | M/O | Reference to NR CGI | - | |
| LTM configuration ID | M/O | Integer (1-8) | - | |
| LTM cell switch information | M/O | | YES | ignore |
| -> first TCI state ID | M/O | Integer (0-127) | - | |
| -> second TCI state ID | M/O | Integer (0-127) | - | |

As illustrated in Table 2, the second notification message may include, but is not limited to, at least one of:
the message type for indicating a type of Xn message and defining a purpose and function of the message;
the first node identifier for indicating M-NG-RAN node UE XnAP ID, in which the first node identifier may be allocated by an M-NG-RAN node;
the second node identifier for indicating S-NG-RAN node UE XnAP ID, in which the second node identifier may be allocated by an S-NG-RAN node;
the access network device identifier for indicating a third access network device, in which the access network device identifier may also be referred to as a target node identifier or target S-NG-RAN node ID;
the target cell identifier for indicating a third cell, in which the target cell identifier may be referred to as a PSCell ID;
target cell information including frequency information and/or cell identifier corresponding to the third cell, in which the frequency information may include a frequency point and/or frequency band, and the cell identifier may include a PCI and/or a CGI;
the LTM configuration identifier for indicating LTM configuration information corresponding to an SCG mobility operation performed by a terminal, for example, in which the LTM configuration identifier may be an LTM candidate ID IE; or
the LTM cell switch information, in which the LTM cell switch information may include first TCI state information and second TCI state information; the first TCI state information may be used to indicate beam information of the first cell (target PCell); for example, the first TCI state information may be a first TCI state identifier (beam identifier), and the LTM configuration identifier may be a candidate TCI state identifier field (CandidateTCI-StatesId IE); the second TCI state information may be used to indicate beam information of the third cell (target PSCell); for example, the second TCI state information may be a second TCI state identifier (beam identifier), and the LTM configuration identifier may be a candidate TCI state identifier field (CandidateTCI-StatesId IE).

Optionally, the "Criticality" in the table indicates whether to perform error handling in a case of an information error (such as a checksum error). YES indicates that the error handling needs to be performed. In a case that the "Assigned Criticality" is "reject", it means that processing of a message in that row is rejected after an error occurs in information in that row. In a case that the "Assigned Criticality" is "ignore", it means that information in that row may be ignored after an error occurs in such information in that row, but other information in the message may continue to be processed.

In some embodiments, each element, each row, or each column in Table 2 above may be implemented as an independent embodiment, and a combination of any element, any row, or any column may also be implemented as an independent embodiment.

In some embodiments, the second notification message and the first notification message may be the same Xn message, which may be sent from the SN to the MN or from the source MN to the target MN.

### Example 4:

The RRC reconfiguration complete message sent by the UE to the T-MN includes the information for the LTM candidate configuration or LTM target cell indicating the UE access.

Optionally, for a specific implementation of this Example 4, reference may be made to the description of Example 1 of the inter-SN SCG LTM scenario, which will not be repeated here.

Optionally, in a case that one LTM candidate configuration is associated with one candidate PCell and a plurality of candidate PSCells, the UE needs to include not only the LTM candidate configuration identifier but also relevant information of the candidate PSCells, such as a PCI and frequency information, in the first RRC reconfiguration complete message sent to the T-MN.

In some embodiments of the disclosure, a communication system is provided. The communication system may include a terminal and a first access network device. The terminal may perform the message transmission method performed by the terminal in the foregoing embodiments of the disclosure; and the first access network device may perform the message transmission method performed by the first access network device in the foregoing embodiments of the disclosure.

Embodiments of the disclosure also provide an apparatus for implementing any one of the methods. For example, an apparatus is provided, including units or modules for implementing the steps performed by the terminal in any one of the methods. As another example, another apparatus is provided, including units or modules for implementing steps performed by the first access network device (for example, an access network device, a core network function node, a core network device, etc.) in any one of the methods.

It should be understood that the division of units or modules in the apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are implemented by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the apparatus may be fully implemented in the form of software called by the processor, or fully implemented in the form of the hardware circuit, or partially implemented in the form of software called by the processor and the remaining part implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a procedure that the processor loads the profiles to implement a hardware circuit configuration may be understood as a procedure that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 8A is a block diagram illustrating a terminal according to an embodiment of the disclosure. As illustrated in FIG. 8A, the terminal 101 may include at least one of: a transceiver module 211 or a processing module 212, etc. In some embodiments, the transceiver module 211 is configured to send a first message to a first access network device, in which the first access network device is an access network device to which a first cell belongs, the first cell is a PCell of the terminal, the first message includes a second message, and the second message is a configuration message corresponding to a third cell; and the processing module 212 is configured to perform a mobility operation, in which the mobility operation includes an SCG mobility operation, the SCG mobility operation includes a PSCell change or a PSCell addition, the PSCell change includes changing a PSCell of the terminal from a second cell to the third cell, the PSCell addition includes adding the third cell as the PSCell of the terminal, the second cell belongs to a second access network device, the third cell belongs to a third access network device, and the second access network device is different from the third access network device. Optionally, the transceiver module 211 may be configured to perform at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) performed by the terminal in any of the methods, which are not repeated here. Optionally, the processing module 212 may be configured to execute at least one of the other steps (e.g., steps S2107, S2112, S2114, S2207, S2212, S2214, but not limited herein) performed by the terminal in any of the methods, which are not repeated here.

FIG. 8B is a block diagram illustrating a first access network device according to an embodiment of the present disclosure. As illustrated in FIG. 8B, the first access network device 1021 may include at least one of: a transceiver module 231 or a processing module 232. In some embodiments, the transceiver module 231 is configured to receive a first message sent by the terminal, in which the first message is a message sent by the terminal when performing a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the first message includes a second message, and the second message is a message corresponding to the third cell, and send the second message to a third access network device; and the processing module 232 is configured to determine the third access network device, in which the third access network device is an access network device to which the third cell belongs, and the third access network device is different from a second access network device to which the second cell belongs. Optionally, the transceiver module 231 may be configured to perform at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) performed by the first access network device in any of the methods, which are not repeated here. Optionally, the processing module 232 may be configured to perform at least one of the other steps (e.g., the steps S2107, S2112, S2114, S2207, S2212, S2214, but not limited herein ) performed by the first access network device in any of the methods, which are not repeated here.

FIG. 8C is a block diagram illustrating a second access network device according to an embodiment of the present disclosure. As illustrated in FIG. 8C, the second access network device 1022 may include at least one of: a transceiver module 241 or a processing module 242. In some embodiments, the transceiver module 241 is configured to send a first indication to a terminal, in which the first indication is configured to instruct the terminal to perform a mobility operation, the mobility operation includes an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to the second access network device, the third cell belongs to a third access network device, and the second access network device is different from the third access network device; and send a third message to a first access network device, in which the third message is configured to instruct the first access network device to determine the third access network device. Optionally, the transceiver module 241 may be configured to perform at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) performed by the first access network device in any of the methods, which are not repeated here. Optionally, the processing module 242 may be configured to perform at least one of the other steps (e.g., the steps S2107, S2112, S2114, S2207, S2212, S2214, but not limited herein) performed by the second access network device in any of the methods, which are not repeated here.

FIG. 8D is a block diagram illustrating a third access network device according to an embodiment of the present disclosure. As illustrated in FIG. 8D, the third access network device 1023 may include at least one of: a transceiver module 251 or a processing module 252. In some embodiments, the transceiver module 261 is configured to receive a second message. Optionally, the transceiver module 251 may be configured to perform at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) performed by the first access network device in any of the methods, which are not repeated here. Optionally, the processing module 252 may be configured to perform at least one of the other steps (e.g., the steps S2107, S2112, S2114, S2207, S2212, S2214, but not limited herein) performed by the third access network device in any of the methods, which are not repeated here.

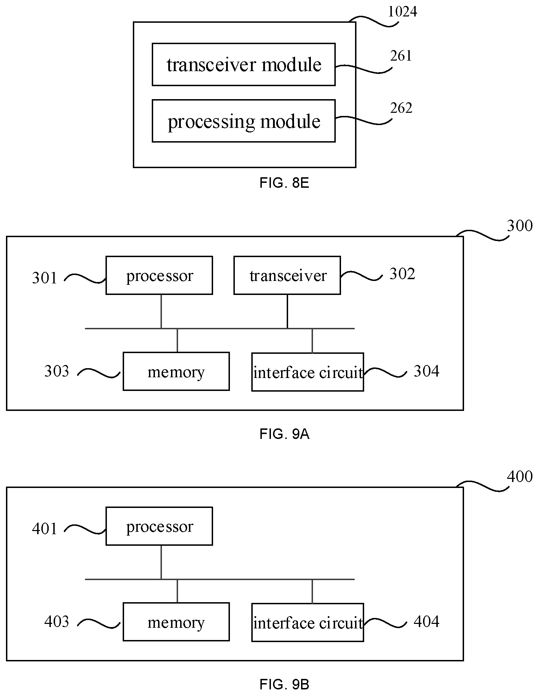

FIG. 8E is a block diagram illustrating a fourth access network device according to an embodiment of the present disclosure. As illustrated in FIG. 8E, the fourth access network device 1024 may include at least one of: a transceiver module 261 or a processing module 262. In some embodiments, the transceiver module 261 is configured to send a first indication to a terminal, in which the first indication is configured to instruct the terminal to perform a mobility operation, the mobility operation includes an MCG mobility operation and an SCG mobility operation, the SCG mobility operation includes a PSCell change or a PSCell addition, the PSCell change includes changing a PSCell of the terminal from a second cell to a third cell, the PSCell addition includes adding the third cell as the PSCell of the terminal, the second cell belongs to a second access network device, the third cell belongs to a third access network device, the second access network device is different from the third access network device, the MCG mobility operation includes changing a PCell of the terminal from a fourth cell to a first cell, the first cell belongs to a first access network device, the fourth cell belongs to the fourth access network device, and the fourth access network device is different from the first access network device; and send a fourth message to the first access network device, in which the fourth message is configured to instruct the first access network device to determine the third access network device. Optionally, the transceiver module 261 may be configured to perform at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) performed by the first access network device in any of the methods, which are not repeated here. Optionally, the processing module 262 may be configured to perform at least one of the other steps (e.g., the steps S2107, S2112, S2114, S2207, S2212, S2214, but not limited herein) performed by the fourth access network device in any of the methods, which are not repeated here.

In some embodiments, the transceiver module may include a sending module and/or a receiving module. The sending module and the receiving module may be separate or integrated together. For example, the transceiver module may be interchanged with a transceiver.

In some embodiments, the processing module may be one module or may include multiple sub-modules. For example, the multiple sub-modules respectively perform all or some of the steps required to be performed by the processing module. For example, the processing module may be interchanged with a processor.

FIG. 9A is a block diagram illustrating a communication device according to an embodiment of the disclosure. The communication device 300 may be a terminal or an access network device. The access network device may be at least one of: a first access network device, a second access network device, a third access network device, or a fourth access network device, or a chip, a chip system, or a processor, etc., that supports the terminal or the access network device to implement any one of the methods. The communication device 300 may be configured to implement the method in the method embodiments. For details, reference may be made to the description in the method embodiments.

As illustrated in FIG. 9A, the communication device 300 may include one or more processors 301. The processor 301 may be a general-purpose processor or a special-purpose processor, such as a baseband processor or a central processing unit. The baseband processor may be configured to process communication protocols and communication data, and the central processing unit may be configured to control communication devices (such as base stations, baseband chips, terminals, terminal chips, DU or CU, etc.) to perform computer programs and process computer program data. For example, the communication device 300 may be configured to perform any one of the methods. For example, one or more processors 301 are configured to call the instructions to cause the communication device 300 to perform any one of the methods.

In some embodiments, the communication device 300 may also include one or more transceivers 302. When the communication device 300 includes one or more transceivers 302, the transceiver 302 may perform at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) in the methods, and the processor 301 performs at least one of the other steps (e.g., the steps S2107, S2112, S2114, S2207, S2212, S2214, but not limited herein).

In some embodiments, the transceiver may include a receiver and/or a transmitter, which may be separate or integrated together. For example, the terms such as transceiver, transceiver unit, transceiver machine, transceiver circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 300 also includes one or more memories 303 for storing data. For example, all or some of the memory 303 may be located outside the communication device 300. In an alternative embodiment, the communication device 300 may include one or more interface circuits 304. For example, the interface circuit 304 is connected to the memory 303. The interface circuit 304 may be configured to receive data from the memory 303 or other devices, and may be configured to send data to the memory 303 or other devices. For example, the interface circuit 304 may read data stored in the memory 303 and send the data to the processor 301.

The communication device 300 in the description of the foregoing embodiments may be a first access network device or a terminal, but the scope of the communication device 300 described in the present disclosure is not limited herein, and the structure of the communication device 300 may not be limited by FIG. 9A. The communication device may be a stand-alone device or may be a part of a larger device. For example, the communication device 300 may be: (1) a stand-alone IC, a chip, a chip system or a subsystem; (2) a collection of ICs including one or more ICs, for example, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a first access network device, a cloud device, an artificial intelligence device, and the like; and (6) others.

FIG. 9B is a block diagram illustrating a chip 400 according to an embodiment of the present disclosure. For the case where the communication device 300 may be a chip or a chip system, reference may be made to the block diagram of the chip 400 illustrated in FIG. 9B, which is not limited in the disclosure.

The chip 400 includes one or more processors 401. The chip 400 is configured to perform any one of the methods.

In some embodiments, the chip 400 also includes one or more interface circuits 404. For example, the terms such as interface circuit, interface, and transceiver pin may be used interchangeably. In some embodiments, the chip 400 also includes one or more memories 403 for storing data. For example, all or part of the memory 403 may be located outside of the chip 400.

For example, the interface circuit 404 is connected to the memory 403. The interface circuit 404 may be configured to receive data from the memory 403 or other devices, and the interface circuit 404 may be configured to send data to the memory 403 or other devices. For example, the interface circuit 404 may read data stored in the memory 403 and send the data to the processor 401.

In some embodiments, the interface circuit 404 performs at least one of the communication steps such as sending and/or receiving (e.g., the steps S2101, S2102, S2103, S2104, S2105, S2106, S2108, S2109, S2110, S2111, S2113, S2201, S2202, S2203, S2204, S2205, S2206, S2208, S2209, S2210, S2211, S2213, but not limited herein) in the methods. The interface circuit 404 performs communication steps such as sending and/or receiving in the methods, for example, the interface circuit 404 performs data interaction between the processor 401, the chip 400, the memory 403 or the transceiver device. In some embodiments, the processor 401 may perform at least one of other steps (e.g., the steps S2107, S2112, S2114, S2207, S2212, S2214, but not limited herein).

The modules and/or devices described in the embodiments, such as virtual devices, physical devices, and chips, may be combined or separated arbitrarily as needed. For example, some or all of the steps may be performed collaboratively by a plurality of modules and/or devices, which is not limited in the disclosure.

Embodiments of the disclosure also provide a storage medium for storing instructions. When the instructions are run on the communication device 300, the communication device 300 is caused to implement any one of the methods. For example, the storage medium is an electronic storage medium. For example, the storage medium is a computer-readable storage medium, but is not limited herein, and may also be a storage medium readable by other devices. For example, the storage medium may be a non-transitory storage medium, which is not limited in the disclosure and the storage medium may also be a transitory storage medium.

Embodiments of the disclosure also provide a program product. When the program product is performed by the communication device 300, the communication device 300 is caused to implement any one of the methods. For example, the program product may be a computer program product. Optionally, the computer program product may include a computer program and/or instructions that, when executed by the communication device, implement any one of the optional message transmission methods described above.

Embodiments of the disclosure also provide a computer program. When the computer program is run on a computer, the computer is caused to implement any one of the methods.

## Claims

1. A message transmission method, performed by a first access network device, wherein the first access network device is an access network device to which a first cell belongs, and the first cell is a primary cell (PCell) of a terminal; and the method comprises:
receiving a first message sent by the terminal, wherein the first message is a message sent by the terminal when performing a mobility operation, the mobility operation comprises a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the first message comprises a second message, and the second message is a message corresponding to the third cell;
determining a third access network device, wherein the third access network device is an access network device to which the third cell belongs, and the third access network device is different from a second access network device to which the second cell belongs; and
sending the second message to the third access network device.

2. The method according to claim 1, wherein determining the third access network device comprises at least one of:
determining the third access network device according to the first message; or
determining the third access network device according to a third message, wherein the third message is a message sent by the second access network device to the first access network device.

3. The method according to claim 2, wherein the first message further comprises at least one of:
target cell information, comprising frequency information and/or cell identifier corresponding to the third cell; or
a mobility configuration identifier for indicating mobility configuration information corresponding to the SCG mobility operation performed by the terminal.

4. The method according to claim 3, wherein the mobility configuration identifier comprises a layer 1 or layer 2 triggered mobility (LTM) configuration identifier, and the LTM configuration identifier indicates LTM configuration information corresponding to the SCG mobility operation performed by the terminal.

5. The method according to claim 2, wherein the first message comprises a first parameter and a second parameter, the first parameter indicates whether the second parameter is configured to determine the third access network device, and the second parameter is a selected PScell for SCG LTM.

6. The method according to claim 2, wherein the third message comprises at least one of:
an access network device identifier for indicating the third access network device;
a target cell identifier for indicating the third cell;
target cell information, comprising frequency information and/or cell identifier corresponding to the third cell;
a mobility configuration identifier for indicating mobility configuration information corresponding to the SCG mobility operation performed by the terminal; or
transmission configuration indication (TCI) state information for indicating beam information of the third cell.

7. The method according to claim 6, wherein the mobility configuration identifier comprises a layer 1 or layer 2 triggered mobility (LTM) configuration identifier, and the LTM configuration identifier indicates LTM configuration information corresponding to the SCG mobility operation performed by the terminal.

8. The method according to any one of claims 1 to 7, wherein the SCG mobility operation is triggered by the terminal or the second access network device.

9. The method according to claim 1, wherein the mobility operation further comprises a master cell group (MCG) mobility operation, the MCG mobility operation comprises changing the PCell of the terminal from a fourth cell to the first cell, the fourth cell belongs to a fourth access network device, and the fourth access network device is different from the first access network device.

10. The method according to claim 9, wherein determining the third access network device comprises at least one of:
determining the third access network device according to the first message; or
determining the third access network device according to a fourth message, wherein the fourth message is a message sent by the fourth access network device to the first access network device.

11. The method according to claim 10, wherein the fourth message comprises at least one of:
an access network device identifier for indicating the third access network device;
a target cell identifier for indicating the third cell;
target cell information, comprising frequency information and/or cell identifier corresponding to the third cell;
a mobility configuration identifier for indicating mobility configuration information corresponding to the SCG mobility operation performed by the terminal; or
TCI state information for indicating beam information of the third cell.

12. The method according to claim 11, wherein the mobility configuration identifier comprises a layer 1 or layer 2 triggered mobility (LTM) configuration identifier, and the LTM configuration identifier indicates LTM configuration information corresponding to the SCG mobility operation performed by the terminal.

13. The method according to any one of claims 9 to 12, wherein the mobility operation is triggered by the terminal or the fourth access network device.

14. The method according to any one of claims 1 to 13, wherein the mobility operation is a cell change or addition triggered based on LTM.

15. The method according to any one of claims 1 to 14, wherein the first message is a first radio resource control (RRC) reconfiguration complete message, the second message is a second RRC reconfiguration complete message, and the first RRC reconfiguration complete message comprises the second RRC reconfiguration complete message.

16. A message transmission method, performed by a terminal, comprising:
performing a mobility operation, wherein the mobility operation comprises a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the second cell belongs to a second access network device, the third cell belongs to a third access network device, and the second access network device is different from the third access network device; and
sending a first message to a first access network device, wherein the first access network device is an access network device to which a first cell belongs, the first cell is a primary cell (PCell) of the terminal, the first message comprises a second message, and the second message is a configuration message corresponding to the third cell.

17. The method according to claim 16, wherein the first message is configured to instruct the first access network device to determine the third access network device.

18. The method according to claim 17, wherein the first message comprises at least one of:
a layer 1 or layer 2 triggered mobility (LTM) configuration identifier, configured to instruct the terminal to perform an LTM configuration corresponding to the SCG mobility operation;
target cell information, comprising frequency information and/or cell identifier corresponding to the third cell; or
a mobility configuration identifier for indicating mobility configuration information corresponding to the SCG mobility operation performed by the terminal.

19. The method according to claim 18, wherein the mobility configuration identifier comprises the LTM configuration identifier, and the LTM configuration identifier indicates LTM configuration information corresponding to the SCG mobility operation performed by the terminal.

20. The method according to any one of claims 16 to 19, wherein the SCG mobility operation is triggered by the terminal or the second access network device.

21. The method according to any one of claims 16 to 19, further comprising:
receiving a first indication sent by the second access network device, wherein the first indication is configured to instruct the terminal to perform the mobility operation.

22. The method according to claim 16, wherein the mobility operation further comprises a master cell group (MCG) mobility operation, the MCG mobility operation comprises changing the PCell of the terminal from a fourth cell to the first cell, the fourth cell belongs to a fourth access network device, and the fourth access network device is different from the first access network device.

23. The method according to claim 22, wherein the mobility operation is triggered by the terminal or the fourth access network device.

24. The method according to any one of claims 16 to 23, wherein the mobility operation is a cell change or addition triggered based on LTM.

25. The method according to any one of claims 16 to 24, wherein the first message is a first radio resource control (RRC) reconfiguration complete message, the second message is a second RRC reconfiguration complete message, and the first RRC reconfiguration complete message comprises the second RRC reconfiguration complete message.

26. A message transmission method, performed by a second access network device, comprising:
sending a first indication to a terminal, wherein the first indication is configured to instruct the terminal to perform a mobility operation, the mobility operation comprises a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the second cell belongs to the second access network device, the third cell belongs to a third access network device, and the second access network device is different from the third access network device; and
sending a third message to a first access network device, wherein the third message is configured to instruct the first access network device to determine the third access network device.

27. The method according to claim 26, wherein the third message comprises at least one of:
an access network device identifier for indicating the third access network device;
a target cell identifier for indicating the third cell;
target cell information, comprising frequency information and/or cell identifier corresponding to the third cell;
a mobility configuration identifier for indicating mobility configuration information corresponding to the SCG mobility operation performed by the terminal; or
transmission configuration indication (TCI) state information for indicating beam information of the third cell.

28. The method according to claim 27, wherein the mobility configuration identifier comprises a layer 1 or layer 2 triggered mobility (LTM) configuration identifier, and the LTM configuration identifier indicates LTM configuration information corresponding to the SCG mobility operation performed by the terminal.

29. The method according to any one of claims 26 to 28, wherein the SCG mobility operation is triggered by the terminal or the second access network device.

30. The method according to any one of claims 26 to 29, wherein the mobility operation is a cell change or addition triggered based on LTM.

31. A message transmission method, performed by a fourth access network device, comprising:
sending a first indication to a terminal, wherein the first indication is configured to instruct the terminal to perform a mobility operation, the mobility operation comprises a master cell group (MCG) mobility operation and a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the second cell belongs to a second access network device, the third cell belongs to a third access network device, the second access network device is different from the third access network device, the MCG mobility operation comprises changing a primary cell (PCell) of the terminal from a fourth cell to a first cell, the first cell belongs to a first access network device, the fourth cell belongs to the fourth access network device, and the fourth access network device is different from the first access network device; and
sending a fourth message to the first access network device, wherein the fourth message is configured to instruct the first access network device to determine the third access network device.

32. The method according to claim 31, wherein the fourth message comprises at least one of:
an access network device identifier for indicating the third access network device;
a target cell identifier for indicating the third cell;
target cell information, comprising frequency information and/or cell identifier corresponding to the third cell;
a mobility configuration identifier for indicating mobility configuration information corresponding to the SCG mobility operation performed by the terminal; or
transmission configuration indication (TCI) state information for indicating beam information of the third cell.

33. The method according to claim 32, wherein the mobility configuration identifier comprises a layer 1 or layer 2 triggered mobility (LTM) configuration identifier, and the LTM configuration identifier indicates LTM configuration information corresponding to the SCG mobility operation performed by the terminal.

34. The method according to any one of claims 31 to 33, wherein the mobility operation is triggered by the terminal or the fourth access network device.

35. The method according to any one of claims 31 to 34, wherein the mobility operation is a cell change or addition triggered based on LTM.

36. A terminal, comprising:
a processing module, configured to perform a mobility operation, wherein the mobility operation comprises a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the second cell belongs to a second access network device, the third cell belongs to a third access network device, and the second access network device is different from the third access network device; and
a transceiver module, configured to send a first message to a first access network device, wherein the first access network device is an access network device to which a first cell belongs, the first cell is a primary cell (PCell) of the terminal, the first message comprises a second message, and the second message is a configuration message corresponding to the third cell.

37. A first access network device, wherein the first access network device is an access network device to which a first cell belongs, and the first cell is a primary cell (PCell) of a terminal; and the first access network device comprises:
a transceiver module, configured to receive a first message sent by the terminal, wherein the first message is a message sent by the terminal when performing a mobility operation, the mobility operation comprises a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the first message comprises a second message, and the second message is a message corresponding to the third cell; and
a processing module, configured to determine a third access network device, wherein the third access network device is an access network device to which the third cell belongs, and the third access network device is different from a second access network device to which the second cell belongs;
wherein the transceiver module is further configured to send the second message to the third access network device.

38. A second access network device, comprising:
a transceiver module, configured to send a first indication to a terminal, wherein the first indication is configured to instruct the terminal to perform a mobility operation, the mobility operation comprises a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the second cell belongs to the second access network device, the third cell belongs to a third access network device, and the second access network device is different from the third access network device; and send a third message to a first access network device, wherein the third message is configured to instruct the first access network device to determine the third access network device.

39. A fourth access network device, comprising:
a transceiver module, configured to send a first indication to a terminal, wherein the first indication is configured to instruct the terminal to perform a mobility operation, the mobility operation comprises a master cell group (MCG) mobility operation and a secondary cell group (SCG) mobility operation, the SCG mobility operation comprises a primary secondary cell (PSCell) change or a PSCell addition, the PSCell change comprises changing a PSCell of the terminal from a second cell to a third cell, the PSCell addition comprises adding the third cell as the PSCell of the terminal, the second cell belongs to a second access network device, the third cell belongs to a third access network device, the second access network device is different from the third access network device, the MCG mobility operation comprises changing a primary cell (PCell) of the terminal from a fourth cell to a first cell, the first cell belongs to a first access network device, the fourth cell belongs to the fourth access network device, and the fourth access network device is different from the first access network device; and send a fourth message to the first access network device, wherein the fourth message is configured to instruct the first access network device to determine the third access network device.

40. A communication device, comprising:
one or more processors;
wherein the communication device is configured to perform the message transmission method according to any one of claims 1 to 15, claims 16 to 25, claims 26 to 30, or claims 31 to 35.

41. A storage medium, storing instructions that, when run on a communication device, cause the communication device to perform the message transmission method according to any one of claims 1 to 15, claims 16 to 25, claims 26 to 30, or claims 31 to 35.

42. A computer program product, comprising a computer program and/or instructions that, when executed by a communication device, implement the message transmission method according to any one of claims 1 to 15, claims 16 to 25, claims 26 to 30, or claims 31 to 35.

43. A communication system, comprising a terminal and an access network device, wherein the access network device comprises at least one of: a first access network device, a second access network device, or a fourth access network device; wherein the terminal is configured to implement the message transmission method according to any one of claims 16 to 25, the first access network device is configured to implement the message transmission method according to any one of claims 1 to 15, the second access network device is configured to implement the message transmission method according to any one of claims 26 to 30, and the fourth access network device is configured to implement the message transmission method according to any one of claims 31 to 35.
